(19) Europäisches Patentamt
European Patent Office
Office européen des brevets

(11) **EP 4 021 169 B1**

(12) **EUROPÄISCHE PATENTSCHRIFT**

(45) Veröffentlichungstag und Bekanntmachung des Hinweises auf die Patenterteilung:
**28.08.2024   Patentblatt 2024/35**

(21) Anmeldenummer: **19769006.8**

(22) Anmeldetag: **29.08.2019**

(51) Internationale Patentklassifikation (IPC):
**A01J 9/04** *(2006.01)*      **B65D 90/48** *(2006.01)*

(52) Gemeinsame Patentklassifikation (CPC):
**A01J 9/04**

(86) Internationale Anmeldenummer:
**PCT/EP2019/000249**

(87) Internationale Veröffentlichungsnummer:
**WO 2021/037324 (04.03.2021 Gazette 2021/09)**

(54) **TRANSPORTVERFAHREN UND TRANSPORTEINRICHTUNG FÜR HOCHWERTIGE FRISCHMILCH UNTER TRANSPORT- UND UMGEBUNGSKRITISCHEN BEDINGUNGEN**

TRANSPORT METHOD AND TRANSPORT DEVICE FOR HIGH-QUALITY FRESH MILK UNDER TRANSPORT- AND ENVIRONMENT-CRITICAL CONDITIONS

PROCÉDÉ DE TRANSPORT ET DISPOSITIF DE TRANSPORT POUR LAIT FRAIS DE QUALITÉ SUPÉRIEURE DANS DES CONDITIONS CRITIQUES EN TERMES DE TRANSPORT ET D'ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.07.2022   Patentblatt 2022/27**

(73) Patentinhaber:
• **GEA TDS GmbH**
  **31157 Sarstedt (DE)**
• **Oriental Tanks Pte Ltd**
  **Singapore 609923 (SG)**

(72) Erfinder:
• **ROLLE, Ulrich**
  **48351 Everswinkel (DE)**
• **STANGE, Roland**
  **48599 Gronau-Epe (DE)**
• **TACKE, Ludger**
  **46342 Velen (DE)**
• **LEAL GARCIA, Maria Carmen**
  **48149 Münster (DE)**

(74) Vertreter: **Hauck Patentanwaltspartnerschaft mbB**
**Postfach 11 31 53**
**20431 Hamburg (DE)**

(56) Entgegenhaltungen:
**WO-A1-2013/169226      WO-A1-99/23016**
**US-A1- 2012 276 262**

**Beschreibung**

TECHNISCHES GEBIET

Die Erfindung betrifft ein Transportverfahren für hochwertige Frischmilch unter transport- und umgebungskritischen Bedingungen sowie eine Transporteinrichtung zur Durchführung des Verfahrens. Das Verfahren umfasst eine Bevorratung der hochwertigen Frischmilch durch Befüllung eines Behältnisses, das ein ungeteiltes Volumen mit mehreren Kubikmetern aufweist, vorzugsweise 20 Kubikmeter und mehr, eine Frischmilch-Temperatur, die gegenüber einer Umgebungs-Temperatur abgesenkt ist, vorzugsweise auf 3,5 bis 4 °C, sowie einen Kopfraum im Behältnis, der mit einem gasförmigen Fluid beaufschlagt ist, vorzugsweise hygienisch aufbereitete Luft. Weiterhin umfasst das Verfahren einen Transport der hochwertigen Frischmilch mit einem Transportmittel, das erdgebunden ist und auf Schiene und Straße transportiert wird und/oder als ein Schiff ausgebildet ist. Im Anschluss an den Transport sieht das Verfahren eine Entleerung der hochwertigen Frischmilch aus dem Behältnis vor.

Der Begriff der hochwertigen Frischmilch soll nachfolgend eine sogenannte länger haltbare standardisierte Frisch- oder ESL-Milch (ESL: *extended shelf life*) mit einem pH-Wert ≥ 6,65 und einem Fettgehalt 1,5/3 oder 3,5 % umfassen. Diese Milch ist so beschaffen, dass sie eine Bevorratung über mindestens 30 Tage und mehr bei einer Bevorratungstemperatur von höchstens 4 °C unbeschadet übersteht, soweit es den mikrobiologischen Aspekt und die chemischen, physikalischen und technologischen Eigenschaften bzw. Funktionalitäten von Ingredienzen dieser Milch, wie Milchfett, Milcheiweiß, Milchzucker, betrifft.

STAND DER TECHNIK

Verarbeitete Lebensmittel oder Rohprodukte mit jeweils Frischecharakteristik werden heute vom Herstellungs- oder Ursprungsland über weite Entfernungen auf die Absatzmärkte bzw. in die Verbraucherländer transportiert. So werden Produkte mit einem pH-Wert ≤ 4,5, beispielsweise Früchte, Konzentrate, Säfte mit Frischecharakteristik, von beispielsweise arabischen, südeuropäischen oder südamerikanischen Regionen in die Verbraucherregionen Süd-Ost-Asien (SEA: unter anderem Indonesien, Philippinen, Singapur, Thailand, Vietnam) einschließlich China geliefert. Der Transport erfolgt in sog. hygienischen Tanks mit ungeteiltem Volumen von 20 Kubikmetern und mehr, wobei die Tanks vorzugsweise langgestreckt ausgebildet und liegend transportfähig sind. Die Transportfähigkeit, die den eigentlichen Transport sowie die Ver- und Umlandevorgänge umfasst, wird vorzugweise durch die Ausgestaltung des Transportmittels in Form eines Tankcontainers erreicht. Ein solcher Tankcontainer besitzt eine Rahmenkonstruktion, in der ein Behälter, nachfolgend als Behältnis bezeichnet, befestigt ist.

Unter einem hygienischen Tank, der bei sehr hohen Qualitätsansprüchen dann als ein sogenannter Steriltank ausgeführt sein muss, versteht man ein Behältnis, das alle erforderlichen Funktionen und Überwachungen aufweist, die üblicherweise erforderlich sind, damit bei seiner Handhabung jegliche Reinfektion des transportierten Produktes durch Verschleppung von Keimen aus dem Behältnis und/oder seinem Umfeld auf das Produkt mit der Folge eines mikrobiologischen Verderbs des Produkts ausgeschlossen ist. Neben einer hinreichenden Reinigung des Innenraumes des Behältnisses zählen zu den kritischen Bereichen ein Mannloch, Ventilvorrichtungen für die Befüllung und Entleerung, Probennahmevorrichtungen, Sicherheits- und Reinigungseinrichtungen sowie Mess- und Überwachungseinrichtungen, die vor der Befüllung des Behältnisses mit Produkt gleichfalls einer hinreichenden sterilisierenden Reinigung unterzogen werden müssen.

Aufgrund der sich verändernden Verbraucherwünsche und -ansprüche (Kaufverhalten) wurde es notwendig, sogenannte hochwertige Frischmilch (siehe vorstehende Spezifizierung) von beispielsweise Neuseeland, Australien oder Europa in die SEA-Regionen einschließlich China zu liefern. Diese Lieferung erfolgte und erfolgt in abgepackten 1-Liter-Gebinden per Flugzeug bei entsprechenden Transportkosten und unter entsprechenden Umweltbelastungen.

Es besteht daher der dringende Wunsch, die in Rede stehende hochwertige Frischmilch in Behältnissen mit 20 m³ und mehr unter sterilen und kostengünstigen Bedingungen über weite Entfernungen, vorzugsweise mittels des Transportmittels Schiff, d.h. aber auch über entsprechend lange Transport- und Bevorratungszeiten (3 bis 4 Wochen), zu transportieren. In der Zielregion kann dann die in großen Volumina zur Verfügung stehende hochwertige Frischmilch auf verbrauchergerechte Gebinde abgefüllt und in den Handel gebracht werden. Wenn dies gelingt, dann eröffnen sich weitere vorteilhafte Möglichkeiten in der Zielregion, nämlich die Weiterverarbeitung der hochwertigen Frischmilch zu Frischjoghurt oder frischen Milchmischgetränken.

Es hat sich allerdings bislang gezeigt, dass der Transport von sensitiven Rohstoffen wie beispielsweise hochwertiger Frischmilch mit einem pH-Wert ≥ 6,65 in einem hygienischen Tank mit den vorhandenen Techniken, Verfahren und Vorrichtungen über eine Transportzeit von 30 Tagen und mehr nicht erfolgreich gelingt. Der Reinfektionsgrad kann in einem hygienischen Tank mit der bisherigen Handhabung durch sogfältige Bedienung und Behandlung mit sterilisierenden Fluiden, bei seiner Befüllung, seinem Transport und seiner Entleerung nicht auf das unbedingt notwendige Maß reduziert werden, damit nach einer Transportzeit von 30 und mehr Tagen (≥ 30 Tage) bei einer Temperatur von 4 °C keine Produktfehler hinsichtlich der mikrobiologischen und physikalischen Eigenschaften der hochwertigen Frischmilch (Fett-Eiweiß-Struktur) vorliegen.

Bislang gelingt keine Bevorratung selbst unter befriedigenden, umfassenden hygienischen Bedingungen, wobei der Kopfraum des Behältnisses mit Luft beaufschlagt ist. Als bisheriger einziger Steuerungseingriff wird zur mikrobiologischen Stabilität der hochwertigen Frischmilch die Temperatur abgesenkt und konstant gehalten. Gegen eine mehrphasige Entmischung der hochwertigen Frischmilch, nämlich, von oben nach unten gesehen, eine Aufrahmung (Fett) in der obersten Schicht, eine fetthaltige Milch darunter und eine fettarme Schicht im unteren Bereich, werden während des Transportes bzw. über die gesamte Bevorratungszeit im Behältnis keine weiteren Steuerungseingriffe vorgenommen. Eine weitere Temperaturabsenkung unter die vorstehenden ca. 4 °C zur Hemmung der Bildung psychrophiler Keine muss bislang unterbleiben, da im Zusammenhang mit der auftretenden signifikanten Aufrahmung bzw. Sedimentation des Fettes eine Fettkristallisierung auftreten würde. Eine spätere Einrührung, Vermischung und Stabilisierung der Fettphase in der Milch wäre dann ohne signifikante und nicht hinnehmbare sensorische Veränderung der hochwertigen Frischmilch unmöglich.

Die diesbezügliche Herausforderung besteht darin, dass die sogenannte standardisierte Frisch- oder ESL-Milch einen Transport über mindestens 30 Tage und mehr bei einer Bevorratungstemperatur von höchstens 4 °C unbeschadet überstehen muss, soweit es den mikrobiologischen Aspekt und die chemischen, physikalischen und technologischen Eigenschaften bzw. Funktionalitäten von Ingredienzen dieser Milch, wie Milchfett, Milcheiweiß, Milchzucker, betrifft. Darüber hinaus kommt verschärfend hinzu, dass vor der Weiterverarbeitung der hochwertigen Frischmilch im ungünstigsten Falle eine lange Lagerung bei hohen Temperaturen und/oder eine Unterbrechung der Kühlkette mit der Folge mikrobiologischer Veränderungen in Kauf zu nehmen ist. Bei einem Transport mit dem Schiff ist weiterhin zu berücksichtigen, dass Transportzeiten und Transportbeanspruchungen mit erdgebundenen Transportmitteln über Land oder Schiene zum Schiff und vom Schiff zu den verarbeitenden Produktionsstätten notwendig sein können.

In der WO 2014/040 700 A1 wird in der einleitenden Beschreibung der Transport einiger Lebensmittelgrundstoffe wie beispielsweise der Grundstoff für frischen und weitgehend unbehandelten Orangensaft und die diesbezügliche Keimbelastung in großvolumigen Tankcontainern thematisiert. Als Schwachstellen dieser Tankcontainer werden das Mannloch, Einrichtungen zur Probennahme und eine Ventilvorrichtung für den Behälter identifiziert. Der bekannte Gegenstand beschränkt sich auf die Ausgestaltung der Ventilvorrichtung. Weitergehende Hinweise auf verfahrenstechnische Merkmale zur Minimierung von Auswirkungen auf das transportierte Produkt, die aus transport- und umgebungskritischen Transport- und Bevorratungsbedingungen resultieren, sind in dem Dokument nicht enthalten.

Die Druckschrift US 2012/0276262 A1 beschreibt ein Verfahren zum Handhaben eines sterilisierten Lebensmittelprodukts, umfassend das Sterilisieren eines intermodalen Behälters, der eine starre Hülle mit gegenüberliegenden geschlossenen Enden und eine Abgabeöffnung in einer der geschlossenen Enden umfasst, und das aseptische Befüllen des intermodalen Behälters mit dem sterilisierten Lebensmittelprodukt. Das Verfahren umfasst ferner das Transportieren des gefüllten intermodalen Behälters, während das sterilisierte Lebensmittelprodukt unter aseptischen Bedingungen gehalten wird. Außerdem kann das Verfahren an einer Entleerungsstelle das Bewegen des intermodalen Behälters in einen Neigungswinkel von mindestens 8 Grad gegenüber der Horizontalen und das Entleeren des sterilisierten Lebensmittelprodukts aus der Abgabeöffnung umfassen.

In der Druckschrift WO99/23016 A1 ist ein Verfahren zum aseptischen Transportieren einer Großmenge eines sterilen Produkts offenbart, beispielsweise ein essbares Nahrungsmittelprodukt. Das Verfahren umfasst das Sterilisieren eines Transportbehälters durch Fluten des Behälters mit einem chemischen Sterilisationsmittel, das Unterdrucksetzen des sterilisierten Behälters mit einer Überdruck-Inertgasatmosphäre und das aseptische Zuführen einer Großmenge des sterilen Produkts in den sterilisierten Behälter. Der mit dem sterilen Produkt befüllte Druckbehälter wird versiegelt, um den Überdruck während des Transports des Behälters im Wesentlichen aufrechtzuerhalten. Der Behälter mit dem sterilen Produkt darin wird dann zu einem entfernten Ort transportiert. Ein Transportbehälter zur Verwendung in dem vorliegenden Verfahren umfasst einen isolierten transportablen Lagertank, der in einem oberen Abschnitt mit einer verschließbaren atmosphärischen Entlüftung versehen ist, ein Inertgasventil, das mit einem Filter zur Abscheidung von Mikroorganismen versehen ist, und ein aseptisches Einlass-/Auslassventil, durch das hindurch ein steriles Produkts zu- bzw. abgeführt wird.

Zu den Transportbedingungen zählen die Transportbeanspruchungen der im Behältnis bevorrateten hochwertigen Frischmilch durch die erdgebundenen Transportmittel sowie insbesondere durch das Transportmittel Schiff, das durch seine ausgeprägten Freiheitsgrade der Bewegung das umfassendste Beanspruchungsspektrum für das Behältnis und damit für die bevorratete und transportierte hochwertige Frischmilch aufweist. Es zeigen die

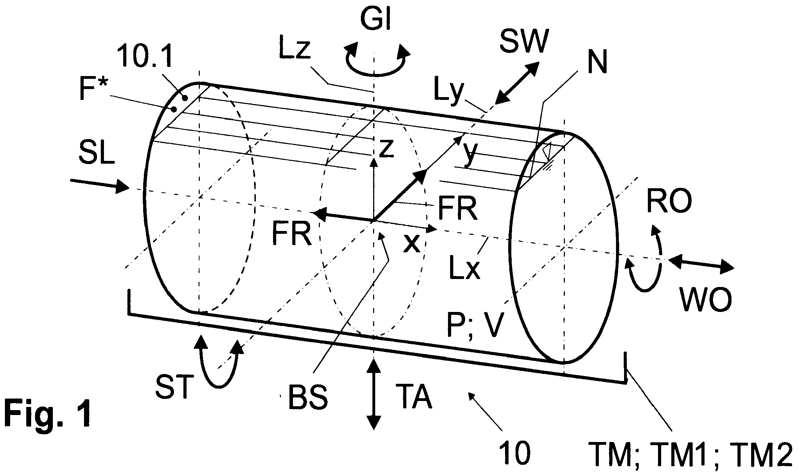

**Figuren 1, 2, 2a, 3** und **3a**    in schematischer Darstellung die an sich bekannten möglichen Bewegungsformen der hauptsächlich zur Anwendung kommenden Transportmittel.

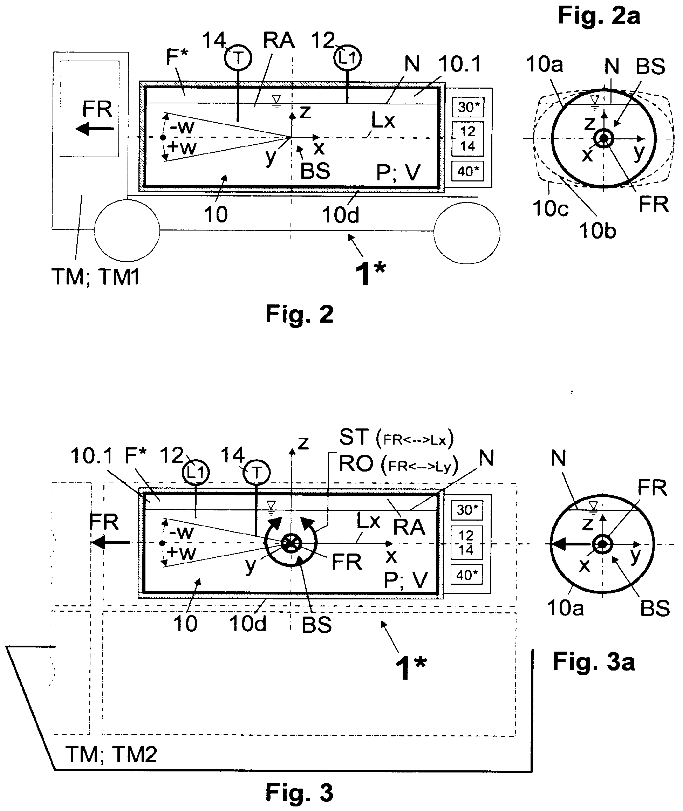

In **Figur 1** der Zeichnung sind an einem schematisch dargestellten, langgestreckten, liegenden Behältnis 10, das ein ungeteiltes Volumen V mit mehreren Kubikmetern aufweist und das nach seiner Befüllung mit einer hochwertigen Frischmilch P einen Kopfraum 10.1 ausbildet, der mit einem gasförmigen Fluid F*, vorzugsweise Luft, beaufschlagt ist, die möglichen Bewegungsformen eines Transportmittels TM in Gestalt eines Schiffes TM2 (**Figur 3**) in Bezug auf ein geometrisches Bezugssystem BS mit seinen Raumachsen x, y und z dargestellt. Die Raumachsen x, y und z sollen mit Hauptachsen des Behältnisses 10, einer ersten Hauptachse Lx, einer zweiten Ly und einer dritten Lz, zusammenfallen. Zum Kopfraum 10.1 bildet die hochwertige Frischmilch P eine freie Oberfläche N aus.

Abhängig von der Lagerung des liegenden Behältnisses 10 im Schiff TM2 kann die erste Hauptachse Lx in Richtung einer Fahrtrichtung FR oder quer zu dieser Fahrtrichtung FR angeordnet sein. In Bezug auf die in der ersten Hauptachse Lx orientierte Fahrtrichtung FR ergeben sich die dargestellten Formen möglicher Schiffsbewegungen:

- rotative, hin- und hergehende Bewegungen RO
  (Rollen um die erste Hauptachse Lx);
- rotative, hin- und hergehende Bewegungen ST
  (Stampfen um die zweite Hauptachse Ly);
- rotative, hin- und hergehende Bewegungen GI
  (Gieren um die dritte Hauptachse Lz);
- translatorische, hin- und hergehende Bewegung WO
  (Wogen in Richtung der ersten Hauptachse Lx);
- translatorische, hin- und hergehende Bewegung SW
  (Schwoien in Richtung der zweiten Hauptachse Ly);
- translatorische, hin- und hergehende Bewegung TA
  (Tauchen in Richtung der dritten Hauptachse Lz);
- translatorische Bewegung SL
  (Slamming in Richtung der positiven ersten Hauptachse Lx).

Die vorstehenden Bewegungsformen sind fast alle in mehr oder weniger ausgeprägter Form auch auf ein erdgebundenes Transportmittel TM1 in Gestalt eines Lastkraftwagens (Tankfahrzeug) übertragbar, bei dem das vorzugsweise liegende Behältnis 10 mit seiner ersten Hauptachse Lx in der Fahrtrichtung FR orientiert ist (**Figur 2**). Das Behältnis 10, angeordnet in einer Transporteinrichtung 1* (**Figuren 2, 2a, 3, 3a**), kann, unabhängig von dem Transportmittel TM1, TM2, eine kreisförmige Behälterform 10a, eine elliptische 10b oder eine kofferförmige 10c aufweisen (**Figur 2a**). Eine Frischmilch-Temperatur T wird über eine Kühleinrichtung 40* auf eine in der Regel vor der Befüllung des Behältnisses 10 mit der hochwertigen Frischmilch P gegenüber der Umgebungs-Temperatur abgesenkte Temperatur konstant gehalten. Diese Konstanthaltung wird über eine Isolierung 10d des Behältnisses 10 unterstützt. Zur Befüllung und Entleerung des Behältnisses 10 ist eine Befüllungs- und Entleerungseinrichtung 30* mit an sich bekannten Ventilvorrichtungen und zugeordneten Verrohrungen vorgesehen. Weiterhin weist das Behältnis 10 eine Temperatur-Messeinrichtung 14 zur Erfassung der Frischmilch-Temperatur T sowie eine Füllstands-Messeinrichtung 12 mit einer ersten Messsonde L1 zur Erfassung des Füllstandes der hochwertigen Frischmilch P im Behältnis 10 auf.

In Bezug auf die im Behältnis 10 bevorratete und transportierte hochwertige Frischmilch P sind deren hin- und hergehende Bewegungsmassen in Richtung der Längsachse des Behältnisses 10, der ersten Hauptachse Lx (**Figuren 2, 2a, 3, 3a**), besonders kritisch, wenn die Transportzeit insbesondere mit dem Schiff TM2 drei bis vier Wochen oder länger dauert und dabei heftiger Seegang herrscht. Diese auch als Schwappbewegungen bezeichneten Verlagerungen der Bewegungsmassen bedingen eine Umlagerung und Veränderung der freien Oberfläche N. Mit dieser Umlagerung und Veränderung geht auch eine entsprechende Umlagerung und Veränderung der an die freie Oberfläche N angrenzenden Fettschicht, eine Aufrahmungsschicht RA, einher. Die Kontaktfläche der Fettschicht an der Innenwandung des Behältnisses 10 verändert sich dabei ständig und massiv quantitativ.

Besonders ausgeprägt und folgenreich sind Schwappbewegungen der freien Oberfläche N, wenn diese sich gegenüber dem gewählten Bezugssystem BS um einen in den **Figuren 2** und **3** mit einem als Neigungswinkel +/-w bezeichneten Winkel verlagert. Diese Schwappbewegungen entstehen insbesondere dann, wenn bei der in Richtung der ersten Hauptachse Lx orientierten Fahrtrichtung FR das Stampfen ST oder bei einer in Richtung der zweiten Hauptachse Ly orientierten Fahrtrichtung FR das Rollen RO vorliegt.

Ausgehend von dem vorgenannten Stand der Technik ist es Aufgabe der vorliegenden Erfindung, ein Transportverfahren der gattungsgemäßen Art und eine Transporteinrichtung der gattungsgemäßen Art zur Durchführung des Transportverfahrens zu schaffen, die eine Minimierung der Aufrahmung in Verbindung mit einer Reduzierung der Anhaftung der Aufrahmung an den in Frage kommenden Innenwandungen des Behältnisses und eine weitestgehende Verhinderung der Entmischung der hochwertigen Frischmilch sicherstellen bei gleichzeitiger Stabilisierung der Mikrobiologie während des Transportes.

## ZUSAMMENFASSUNG DER ERFINDUNG

Diese Aufgabe wird durch ein Transportverfahren mit den Merkmalen des Anspruchs 1 gelöst. Vorteilhafte Ausgestaltungen des erfindungsgemäßen Transportverfahrens sind Gegenstand der zugeordneten Unteransprüche. Eine Transporteinrichtung zur Durchführung des Transportverfahrens ist Gegenstand des nebengeordneten Anspruchs 11. Vorteilhafte Ausführungsformen der erfindungsgemäßen Transporteinrichtung sind in den zugeordneten Unteransprüchen beschrieben. Ein System mit einer Transporteinrichtung ist Gegenstand des Anspruchs 20.

Die Erfindung geht verfahrenstechnisch aus von einem an sich bekannten Transportverfahren, das unter den üblichen Transport- und Umweltbedingungen (Zeitdauer, Umwelttemperaturen, kräftemäßige Beanspruchungen der transportierten hochwertigen Frischmilch P) folgende Merkmale umfasst:

- eine Bevorratung der hochwertigen Frischmilch

  o durch Befüllung eines Behältnisses, das ein ungeteiltes Volumen mit mehreren Kubikmetern aufweist und die Spezifikation eines hygienischen Behältnisses besitzt,
  o mit einer Frischmilch-Temperatur, die gegenüber einer Umgebungs-Temperatur abgesenkt ist,
  o mit einem Kopfraum im Behältnis, der mit einem gasförmigen Fluid beaufschlagt ist, vorzugsweise mit hygienisch aufbereiteter Luft;

- einen Transport der hochwertigen Frischmilch mit einem Transportmittel, das als ein erdgebundenes Transportmittel und/oder als ein Schiff ausgebildet ist;
- eine Entleerung der hochwertigen Frischmilch aus dem Behältnis.

Die der Erfindung zugrundeliegende Aufgabe wird gelöst, wenn bei dem Verfahren der gattungsgemäßen Art folgende Schritte vorgesehen sind:

(A) eine Befüllung des Behältnisses mit der hochwertigen Frischmilch unter sterilen Bedingungen und in einer Bevorratungszeit, die einen Zeitraum nach der Befüllung bis zu der Entleerung des Behältnisses umfasst,
(B) eine Erfassung eines Neigungswinkels, der zwischen einer zum Kopfraum hin ausgebildeten freien Oberfläche der hochwertigen Frischmilch und einem auf das Behältnis bezogenen Bezugssystem gebildet ist;
(C) eine Erfassung eines Druckes im Kopfraum;
(D) eine Erhöhung des Druckes in Abhängigkeit vom und proportional zum Betrag des Neigungswinkels durch Zufuhr eines gasförmigen, sterilen Fluids in den Kopfraum unter sterilen Bedingungen und
(E) die Entleerung der hochwertigen Frischmilch aus dem Behältnis unter sterilen Bedingungen.

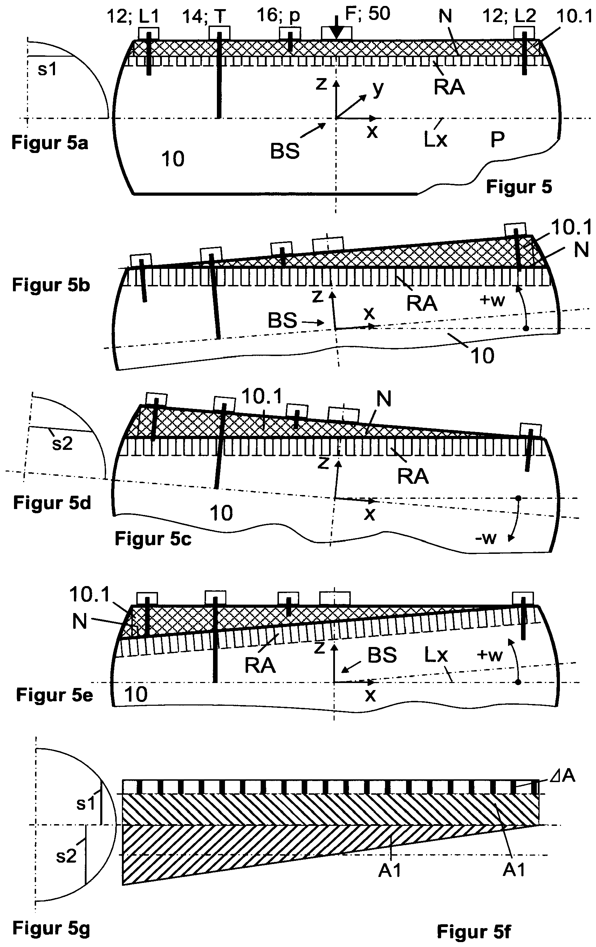

Der erfinderische Grundgedanke geht zunächst von einem Sachverhalt aus, wie er sich bei dem Transport einer Flüssigkeit, im vorliegenden Falle der hochwertigen Frischmilch, in einem über einen längeren Zeitraum bewegten Behältnis der vorbeschriebenen Art in den **Figuren 5, 5a** bis **5g** der Zeichnung in an sich bekannter Weise darstellt. Aus diesem Grunde werden in der nachfolgenden, auf diese Figuren bezogenen Beschreibung die vorstehend zum Stand der Technik bereits eingeführten Bezugszeichen und Abkürzungen sowie bereits einige zum besseren Verständnis hilfreiche Bezeichnungen der Erfindung verwendet.

Es zeigen die

**Figuren 5a** bis **5g** in schematischer Darstellung die Ausprägung der freien Oberfläche der hochwertigen Frischmilch bei Neigung des Behältnisses oder bei Schwappbewegungen der hochwertigen Frischmilch in einem waagerecht orientierten Behältnis.

Bei dem stationären, waagerecht orientierten Behältnis 10 (**Figuren 5, 5a;** kreisförmiger oder elliptischer oder kofferförmiger Querschnitt) mit dem Kopfraum 10.1, der mit einem gasförmigen, sterilen Fluid F beaufschlagt ist, oder bei ruhiger Fortbewegung dieses Behältnisses 10 bildet sich eine maximal mögliche freie Oberfläche N der hochwertigen Frischmilch P aus, oberhalb derer das gasförmige, sterile Fluid F den sich entsprechend geometrisch ausbildenden Kopfraum 10.1 ausfüllt. Die Dicke der unvermeidlichen Aufrahmungsschicht RA ist damit minimiert. Die Anhaftungsfläche des Rahmes (Fettes) auf der Innenwandung des Behältnisses 10 ist im Wesentlichen als dünne, langgestreckte Rechteckfläche ausgeformt, die sich umfänglich über die Mantelfläche und die Stirnflächen des Behältnisses 10 erstreckt. Die Möglichkeit der Anlagerung des Fettes auf der sich anbietenden Innenwandung des Behältnisses 10 ist dadurch begrenzt.

Bei dem bewegten, flüssigkeitsgefüllten Behältnis 10 mit dem mit dem gasförmigen, sterilen Fluid beaufschlagten Kopfraum 10.1, verursacht durch Stampfen ST oder Rollen des Schiffes TM2 oder durch positive und negative Beschleunigungen und/ oder Kurvenfahrten des erdgebundenen Transportmittels TM1, neigt sich das Behältnis 10 in Richtung seiner ersten Hauptachse Lx um den Neigungswinkel +/-w und führt damit das auf das Behältnis 10 bezogene Bezugssystem BS mit (**Figuren 5b** bis **5d**). Unter dem Einfluss der Schwerkraft orientiert sich weiterhin die freie Oberfläche N waagerecht und bildet somit den Neigungswinkel +/-w gegenüber dem Bezugssystem BS. Die darunter befindliche hochwertige Frischmilch P verlagert sich, abhängig von dem Betrag des Neigungswinkels +/-w, wechselseitig entweder in den einen oder den anderen Eckenbereich des Innenraumes des Behältnisses 10, wobei dieser jeweilige Eckenbereich entweder teilweise oder vollständig geflutet wird. Die entsprechend geneigte freie Oberfläche N besitzt bei dem üblich bemessenen Kopfraum 10.1 eine geringere flächenmäßige Ausdehnung als bei waagerechter Ausrichtung des Behältnisses 10.

Dieser Sachverhalt ist näherungsweise quantitativ in den **Figuren 5f, 5g** in Verbindung mit den **Figuren 5, 5a** einerseits und den **Figuren** 5b, **5d** andererseits dargestellt. Bei dem waagerecht orientierten Behältnis 10 (**Figuren 5, 5a**) ergibt sich als freie Oberfläche N eine Rechteckfläche, gebildet aus einer zweifachen Äquivalenzfläche A1 und einer zweifachen Differenzfläche $\Delta$A. Die Summe beider Flächen A1 und $\Delta$A resultiert aus einer im Kreisquerschnitt infolge des Füllstandes gebildeten Abmessung einer ersten Sehne s1 und näherungsweise einer Längenabmessung des Behältnisses 10 (**Figuren 5a, 5g**). Unter dem Neigungswinkel +/-w (**Figur** nimmt die freie Oberfläche N die Gestalt eines Dreiecks an, von dem in **Figur 5f** nur die Hälfte dargestellt ist. Diese halbe Dreiecksfläche besitzt die Größe der Äquivalenzfläche A1. Sie resultiert wiederum aus einer im Kreisquerschnitt infolge des Füllstandes gebildeten Abmessung einer zweiten Sehne s2 und näherungsweise der Längenabmessung des Behältnisses 10 (**Figuren 5d, 5g**). Der Unterschied zwischen der freien Oberfläche N bei waagerechter Orientierung des Behältnisses 10 und jener bei einem Neigungswinkel +/-w beträgt somit die zweifache Differenzfläche $\Delta$A.

Die Aufrahmungsschicht RA muss sich entsprechend umordnen und bildet zwangläufig bei Schräglage eine dickere Schicht aus. Darüber hinaus schwallt die hochwertige Frischmilch mit dieser dickeren Aufrahmungsschicht RA in den zugeordneten Eckenbereich des Behältnisses 10 und findet dort eine entsprechende, massierte, ausgedehnte Innenwandungsfläche zur Anhaftung vor. Es kommt zu Zusammenballungen in diesen Eckenbereichen und massierten Anlagerungen bzw. Sedimentationen ähnlich Feststoffablagerungen in engen Flaschenhälsen bei Flüssigkeits-Feststoff-Gemischen.

Vergleichbare Sachverhalte ergeben sich bei sogenannten Schwappbewegungen der hochwertigen Frischmilch P in Richtung der ersten Hauptachse Lx um einen Neigungswinkel +/-w gegenüber einem waagerecht orientierten Behältnis 10 mit entsprechender Lage des Bezugssystems BS (**Figur 5e**).

Mechanismus und Begründung für die erfinderischen Merkmale

Der erfinderische Grundgedanke und die diesbezüglichen erfinderischen Merkmale finden ihre Begründung weiterhin in dem nachfolgend dargestellten physikalischen Mechanismus. Es wird nachfolgend diesbezüglich eine näherungsweise rechnerische Abschätzung vorgenommen.

Die hochwertige Frischmilch P enthält Luft, wenn das gasförmige, sterile Fluid F entsprechend aufbereitete und bereitgestellte Luft ist. Diese Luft liegt in mehr oder weniger feinblasiger Ausprägung vor, verteilt über die gesamte Menge der hochwertigen Frischmilch P und bedingt insbesondere auch durch den üblichen Homogenisierungsprozess mit dem Ziel einer feinteiligen Fettverteilung in der hochwertigen Frischmilch P.

Diese Luftblasen, deren Dichte gegenüber einer Dichte $\rho$ der hochwertigen Frischmilch P in erster Näherung vernachlässigbar ist, können näherungsweise als Kugeln mit einem Kugeldurchmesser d, einem daraus resultierenden Kugelquerschnitt $A_K = d^2\pi/4$ und einem Kugelvolumen $V_K = d^3\pi/6$ angesehen werden. Die Luftblasen unterliegen in der von der Frischmilch-Temperatur T abhängigen, mehr oder weniger zähen hochwertige Frischmilch P (dynamische Zähigkeit $\eta$ = f(T)) Auftriebskräften $F_A$ im Schwerefeld der Erde (Erdbeschleunigung g), denen bei der zwangsläufigen Auftriebsbewegung Reibungskräfte $F_R$ aus der hochwertigen Frischmilch P entgegenwirken.

Die Luftblasen wirken als sogenannte Kristallisationskeime für Fettteilchen, sodass durch die Luftblasen ein der Flotation ähnlicher Transport dieser Fettteilchen gegen die Schwerkraft stattfindet. Dieser Transport wird durch die Dichteunterschiede zwischen den Fettteilchen und der diese aufnehmenden Milchphase noch unterstützt.

Durch die erfindungsgemäße Erhöhung eines Druckes p im Kopfraum 10.1, wodurch sich auch der Druck in der darunter befindlichen hochwertigen Frischmilch P entsprechend erhöht, werden die Luftblasen gemäß dem thermodynamischen Gesetz $pV_K$ = konstant in ihrem Volumen $V_K$ reduziert. Dadurch reduziert sich die an der reduzierten Luftblase angreifende Auftriebskraft $F_A$ ($F_A \sim V_K \sim 1/p$). Aber auch die Reibungskraft $F_R$ wird kleiner, jedoch nicht im gleichen Verhältnis wie die Auftriebskraft $F_A$, da die Reibungskraft $F_R$ unter anderem vom Kugelquerschnitt $A_K$, der proportional zu $d^2$ ist, und die Auftriebskraft $F_A$ unter anderem vom Kugelvolumen $V_K$, das proportional zu $d^3$ ist, abhängig sind.

Die an der Blase angreifende Reibungskraft $F_R$ ist auch wesentlich von der dynamischen Zähigkeit $\eta$ der hochwertigen Frischmilch P abhängig. Die dynamische Zähigkeit $\eta$ ist umgekehrt proportional zur Frischmilch-Temperatur T ($\eta$ - 1/T).

Wird die Bewegung der Luftblase im Wesentlichen durch Auftriebskräfte $F_A$ ausgelöst, dann entspricht die Geschwindigkeit der Luftblase der stationären Auftriebsgeschwindigkeit v. Im Bereich der schleichenden Strömung gilt das STOKESsche Gesetz nach Gleichung (1) mit

$$\zeta = 24/Re = 24\ \eta/vd\rho \qquad (1)$$

wobei $\zeta$ der Widerstandsbeiwert für die umströmte Kugel und nach Gleichung (2) Re die sog. Reynoldszahl mit

$$Re = vd/v = vd\rho/\eta \qquad (2)$$

sind. Aus einer Kräftebetrachtung an der Luftblase ergibt sich nach Gleichung (3) eine resultierende Kraft

$$\Delta F = F_A - F_R \qquad (3)$$

Aus dem Gleichgewicht für $\Delta F = 0$ resultiert aus den vorstehenden Berechnungsgleichungen (1) bis (3) und den nachfolgenden (4) bis (8) mit

$$F_A = V_K\ \Delta\rho g \qquad (4)$$

$$F_R = \zeta\ A_K\ \frac{\rho}{2} v^2 \qquad (5)$$

$$p\ V_K = konst \qquad (6)$$

$$V_K = \frac{\pi}{6}\ d^3 \qquad (7)$$

$$A_K = \frac{\pi}{4}\ d^2 \qquad (8)$$

die stationäre Auftriebsgeschwindigkeit v nach Gleichung (9) mit

$$v = KONST\ \frac{1}{p^{2/3}}\ \frac{1}{\eta(T)} \qquad (9)$$

Die stationäre Auftriebsgeschwindigkeit v der Luftblasen und der an diese gebundenen Fettteilchen ist damit umgekehrt proportional zur dynamischen Zähigkeit $\eta$ ($\eta$ - 1/T), die im Rahmen der nach Anspruch 2 vorgesehenen erfindungsgemäßen Temperaturabsenkung von 3,5 bis 4 °C auf 2 bis 2,5 °C von ca. $\eta = 1,2$ cp auf ca. $\eta = 1,6$ cp (cp: Centipoise) ansteigt. Weiterhin ist die stationäre Auftriebsgeschwindigkeit v umgekehrt proportional zum Druck p im Kopfraum des Behältnisses, der in der erfindungsgemäßen Auslegung bis auf 1,4 bar Überdruck ansteigen kann. Die beiden physikalischen Größen Druck p und dynamische Zähigkeit $\eta$ bzw. Frischmilch-Temperatur T haben in ihrer erfindungsgemäßen Bemessung etwa das gleiche reduzierende Ausmaß auf die Auftriebsgeschwindigkeit v der Luftblasen und damit der Fettteilchen.

Zu den Ansprüchen der Erfindung

Ein wesentliches Merkmal ist die Handhabung der hochwertigen Frischmilch bei der Befüllung und Entleerung des Behältnisses unter sterilen Bedingungen. Diese Maßnahmen schließen alle kritischen Bereiche des Behältnisses, wie vorstehend bereits thematisiert, ein. Weitere signifikante Merkmale sind die Erfassung des Neigungswinkels der freien Oberfläche in Bezug auf das Bezugssystem und die Erfassung des Druckes im Kopfraum. Sie finden ihre Begründung in den vorstehend dargelegten Sachverhalten hinsichtlich Ausbildung der freien Oberfläche, der davon abhängigen Dicke der Aufrahmungsschicht und hinsichtlich des Einflusses des Druckes auf die Auftriebsgeschwindigkeit der Luftblasen bzw. Fettteilchen. Der Druck wird alsdann in Abhängigkeit vom und proportional zum Betrag des Neigungswinkels durch Zufuhr des gasförmigen, sterilen Fluids erhöht, wobei auch diese Maßnahme unter sterilen Bedingungen erfolgt.

Die Auftriebsgeschwindigkeit der Fettteilchen und damit das Maß der Aufrahmung werden signifikant reduziert, wenn das Transportverfahren nach Schritt (G) die Frischmilch-Temperatur in einem letzten zeitlichen Abschnitt der Bevorratungszeit von 3,5°C bis 4°C auf 2°C bis 2,5°C absenkt. Es hat sich als besonders zielführend erwiesen, wenn der letzte Abschnitt einem Drittel der Bevorratungszeit entspricht.

Das Transportverfahren wird vorteilhaft hinsichtlich der erfindungsgemäßen Abhängigkeit zwischen dem Neigungswinkel und dem Druck derart ausgestaltet, dass ein Neigungswinkelbereich sowie ein zulässiger Druckbereich vorgegeben werden. Der Neigungswinkelbereichs ist jeweils durch einen maximalen negativen Neigungswinkel oder einen maximalen positiven Neigungswinkel für den Neigungswinkel gebildet. Der Neigungswinkelbereich kann abhängig vom Seegang und den relevanten Abmessungen des Schiffes bis zu +/- 5 Grad, in Extremsituationen auch mehr, betragen.

Der zulässige Druckbereich bewegt sich zwischen einem minimalen Druck, der mindestens dem Atmosphärendruck entsprechen kann, und einem zulässigen maximalen Druck, der durch die festigkeitsmäßige Auslegung des Behältnisses nach oben begrenzt und entsprechend einem Vorschlag mit bis zu 1,4 bar Überdruck bemessen ist. Zwischen dem Neigungswinkelbereich und dem Druckbereich ist im einfachsten Falle eine Korrelation vorgesehen, d.h. dem maximalen Druck wird der Betrag des maximalen positiven bzw. maximalen negativen Neigungswinkels zugeordnet.

Um die durch die erfindungsgemäß Druckerhöhung reduzierten Luftblasen nach Abklingen der Neigungsbewegungen durch Druckabsenkung nicht wieder in ihrem Volumen zu vergrößern und damit ihre Auftriebsgeschwindigkeit und die daraus resultierende Aufrahmungsgeschwindigkeit nicht zu erhöhen, sieht das Transportverfahren vor, dass der Druck dem zeitlichen Verlauf des Betrages des erfassten Neigungswinkels immer nur dann folgt, wenn ein nachfolgender Betrag des erfassten Neigungswinkels gleich oder größer als ein vorhergehender Betrag ist. Bei dem vorhergehenden Betrag handelt es sich nicht um den unmittelbar vorhergehenden, sondern um jedweden in Frage kommenden Betrag in der bis dahin abgelaufenen Transportzeit.

Das Bezugssystem für die Bestimmung des Neigungswinkels ist vorzugsweise ein orthogonales dreiachsiges Bezugssystem, bestehend aus einer x-, y- und z-Achse. Die Neigung der freien Oberfläche wird jeweils in einer durch die x- und z-Achse sowie in einer durch die y- und z-Achse aufgespannten Ebene gemessen. Aus diesen beiden orthogonalen Messwerten wird der maßgebliche Neigungswinkel ermittelt. Es hat sich dabei als zweckmäßig erwiesen, wenn das orthogonale dreiachsige Bezugssystem durch eine in x-Richtung orientierte erste Hauptachsen, eine in y-Richtung orientierte zweite Hauptachse und eine in z-Richtung orientierte dritte Hauptachse des Behältnisses gebildet ist. Die Bestimmung der kritischen Neigungsbewegungen wird nach einem weiteren Vorschlag erleichtert, wenn entweder die erste Hauptachse oder die zweite Hauptachse in einer Fahrtrichtung des Transportmittels orientiert ist.

Eine Schwappbewegung der hochwertigen Frischmilch im ruhenden, waagerecht orientierten Behältnis wird identifiziert, wenn nach einem weiteren Vorschlag eine Füllstands-Messeinrichtung zur Erfassung des Füllstandes der hochwertigen Frischmilch im Behältnis derart eingerichtet ist, dass zwei Messsonden, die im Abstand voneinander in die freie Oberfläche eintauchen, vorgesehen sind, die in Verbindung mit einer entsprechend eingerichteten Steuerung durch den unterschiedlichen Grad ihrer Benetzung eine entsprechende Lageveränderung der freien Oberfläche quantitativ ermitteln.

Eine erfindungsgemäße Transportvorrichtung zur Durchführung des erfindungsgemäßen Transportverfahrens umfasst folgende an sich bekannte Merkmale:

- Ein Behältnis, das ein ungeteiltes Volumen mit mehreren Kubikmetern zur Bevorratung der hochwertigen Frischmilch aufweist. Das ungeteilte Volumen ist dabei auch einer hinreichenden Reinigung unter sterilen Anforderungen geschuldet.
- Eine Befüllungs- und eine Entleerungseinrichtung zur Befüllung des Behältnisses mit und zur Entleerung der hochwertigen Frischmilch aus dem Behältnis.
- Einen Kopfraum im Behältnis, der mit einem gasförmigen Fluid beaufschlagbar ist.
- Eine Temperatur-Messeinrichtung zur Erfassung einer Frischmilch-Temperatur im Behältnis.
- Eine Füllstands-Messeinrichtung mit einer ersten Messsonde.
- Eine Kühleinrichtung, die zumindest die gegenüber einer Umgebungs-Temperatur abgesenkte Frischmilch-Temperatur konstant hält. Eine Absenkung auf die Frischmilch-Temperatur wird zweckmäßig vor der Befüllung des Behältnisses vorgenommen.
- Ein Transportmittel zum Transport des Behältnisses in Gestalt eines erdgebundenen Transportmittels und/oder eines Schiffes.

Ausgehend von der gattungsgemäßen Transporteinrichtung wird die der Erfindung zugrundeliegende Aufgabe vorrichtungstechnisch gelöst durch

• das Behältnis, das in Verbindung mit der Befüllungs- und der Entleerungseinrichtung so eingerichtet ist, dass eine umfassende sterile Behandlung der hochwertigen Frischmilch erfolgen kann;
• eine erste Einrichtung mit wenigstens einem ersten Neigungsmesser zur Erfassung eines Neigungswinkels, der zwischen einer zum Kopfraum hin ausgebildeten freien Oberfläche der hochwertigen Frischmilch und einem auf das Behältnis bezogenen Bezugssystem gebildet ist;
• eine zweite Einrichtung zur Erfassung eines Druckes im Kopfraum;
• eine dritte Einrichtung zur Zufuhr eines gasförmigen, sterilen Fluids in den Kopfraum unter sterilen Bedingungen;
• eine Steuereinrichtung, die eine Erhöhung des Druckes in Abhängigkeit vom und proportional zum Betrag des Neigungswinkels durch Zufuhr des gasförmigen, sterilen Fluids in den Kopfraum steuern kann.

Die Steuereinrichtung weist einen Datenspeicher auf, in dem ein Neigungswinkelbereich, der einen maximalen negativen Neigungswinkel und einen maximalen positiven Neigungswinkel umfasst, hinterlegt ist. Ebenso ist dort ein zulässiger Druckbereich hinterlegt, der einen minimalen Druck und einem maximalen Druck umfasst. Der zulässige Druckbereich korreliert im Zuge der vorgesehenen Steuerung des Druckes in Abhängigkeit vom jeweils gemessenen Neigungswinkel mit dem Betrag des Neigungswinkelbereichs. Der minimale Druck kann dabei von dem Atmosphärendruck ausgehen; er kann aber auch auf einen höheren Druck festgelegt werden. Der maximale Druck bemisst sich aus der festigkeitsmäßigen Auslegung des Behältnisses, die auch wirtschaftliche Gesichtspunkte berücksichtigt.

Eine sichere Erfassung des im allgemeinsten Falle räumlich orientierten und maßgeblichen Neigungswinkels wird erreicht, wenn zwei Neigungsmesser im Bezugssystem vorgesehen sind, das vorzugsweise ein orthogonales dreiachsiges Bezugssystem mit einer x-, y- und z-Achse ist. Der erste Neigungsmesser misst die Neigung der freien Oberfläche in einer durch die x- und z-Achse aufgespannten ersten Ebene und ein zweiter Neigungsmesser misst die Neigung der freien Oberfläche in einer durch die y- und z-Achse aufgespannten zweiten Ebene. Aus den beiden orthogonalen Messwerten wird der in Frage kommende Neigungswinkel ermittelt.

Das orthogonale Bezugssystem ist zweckmäßig derart orientiert, dass es durch eine in x-Richtung orientierte erste Hauptachsen, eine in y-Richtung orientierte zweite Hauptachse und eine in z-Richtung orientierte dritte Hauptachse des Behältnisses gebildet ist. Dabei vereinfacht sich die Ermittlung kritischer Neigungsbewegungen des Behältnisses, wenn entweder die erste Hauptachse oder die zweite Hauptachse in einer Fahrtrichtung des Transportmittels orientiert ist.

Die Anordnung des Behältnisses vorzugsweise innerhalb eines Tankcontainers bedingt eine langgestreckte, liegende Ausbildung des Behältnisses, wobei die x-Achse des Bezugssystems in Längsrichtung des Behältnisses, demnach in der ersten Hauptachse orientiert ist.

Aus Gründen der Wirtschaftlichkeit und der Kostenoptimierung besitzt das Behältnis ein ungeteiltes Volumen von 20 m$^3$ und mehr, wobei generell das Volumen nach oben im Rahmen einer Ausbildung in einem Tankcontainer durch dessen standardisierte Baugröße begrenzt ist.

Zur Identifizierung und Ermittlung von Schwappbewegungen der hochwertigen Frischmilch innerhalb eines waagerecht angeordneten und/oder unbewegten Behältnisses weist die am Behältnis vorgesehene Füllstands-Messeinrichtung eine zweite Messsonde auf. Die erste und die zweite Messsonde sind dabei im Abstand voneinander angeordnet und greifen über den Kopfraum in die freie Oberfläche der hochwertigen Frischmilch ein, wobei an beiden Messsonden ermittelte, sich unterscheidende Messergebnisse zielführend auswertbar sind.

Die Versorgung des Kopfraumes des Behältnisses mit dem gasförmigen, sterilen Fluid während des Transportes wird dadurch wesentlich apparativ vereinfacht, wenn ein Pufferbehälter mit einem auf die Größe des Kopfraumes abgestimmten Puffervolumen vorgesehen ist, der wahlweise mit dem Kopfraum verbunden und in dem das gasförmige, sterile Fluid mit einem Überdruck gespeichert ist. Dieser Überdruck ist so bemessen, dass er die Bereitstellung des maximalen Druckes im Kopfraum des Behältnisses über die gesamte Bevorratungszeit sicherstellt.

Um im Zuge der Befüllung und der Entleerung des Behältnisses eine hinreichend sterile Anbindung an Versorgungs- und Entsorgungssysteme und sterile Handhabung der Transporteinrichtung sicherzustellen, sieht die Erfindung eine Füll- und Entleerungsplattform vor, die in Verbindung mit der Transporteinrichtung ein System dergestalt bildet,

• dass die Füll- und Entleerungsplattform die folgenden Funktionseinrichtungen umfasst:

• eine vierte Einrichtung zur Bereitstellung von Reinigungsmittel,
• Füll- und Entleerungsleitungen,
• eine fünfte Einrichtung zur Bereitstellung von Kühlmittel und
• eine sechste Einrichtung zur Bereitstellung von gasförmigem, sterilem Fluid, und dass über eine Schnitt- und Kupplungsstelle die

• die vierte Einrichtung mit den Reinigungsmittel-Anschlüssen der Transporteinrichtung,
• die Füll- und Entleerungsleitungen mit der Befüll- und Entleerungseinrichtung der Transporteinrichtung,
• die fünfte Einrichtung mit der Kühleinrichtung der Transporteinrichtung und

- die sechste Einrichtung mit der dritten Einrichtung der Transporteinrichtung verbunden ist.

KURZBESCHREIBUNG DER ZEICHNUNGEN

Eine eingehendere Darstellung der Erfindung ergibt sich aus der folgenden Beschreibung und den beigefügten weiteren Figuren der Zeichnung sowie aus den Ansprüchen. Während die Erfindung in den verschiedensten Ausgestaltungen eines Transportverfahrens der gattungsgemäßen Art und den verschiedensten Ausführungsformen einer Transporteinrichtung der gattungsgemäßen Art zur Durchführung des Transportverfahrens realisiert ist, wird nachfolgend anhand der Zeichnung ein bevorzugtes Ausführungsbeispiel des erfindungsgemäßen Transportverfahrens und der erfindungsgemäßen Transporteinrichtung beschrieben. Es zeigen

| | |
|---|---|
| **Figur 4** | in schematischer Darstellung eine erfindungsgemäße Transporteinrichtung in ihrer möglichen Anordnung auf dem Transportmittel Schiff; |
| **Figur 6** | ein Blockschaltbild des erfindungsgemäßen Transportverfahrens; |
| **Figur 6a** | ein Blockschaltbild des erfindungsgemäßen Transportverfahrens gemäß **Figur 6,** ergänzt durch einen weiteren Verfahrensschritt (G); |
| **Figur 7** | in schematischer Darstellung eine erfindungsgemäße Transporteinrichtung zur Durchführung der Transportverfahren gemäß **Figur 6** oder **Figur 6a** in Verbindung mit einer erfindungsgemäßen Füll- und Entleerungsplattform; |
| **Figur 8** | einen beispielhaft angenommenen zeitlichen Verlauf eines Neigungswinkels über eine gesamte Bevorratungszeit, die eine Transportzeit einschließt, sowie einen beispielhaft angenommenen, sich über die gesamte Bevorratungszeit erstreckenden zeitlichen Verlauf einer erfindungsgemäßen Frischmilch-Temperatur und |
| **Figur 9** | einen beispielhaft angenommenen zeitlichen Verlauf eines Druckes im Kopfraum des Behältnisses über eine gesamte Bevorratungszeit in Korrelation zu dem zeitlichen Verlauf des Neigungswinkels gemäß **Figur 8.** |

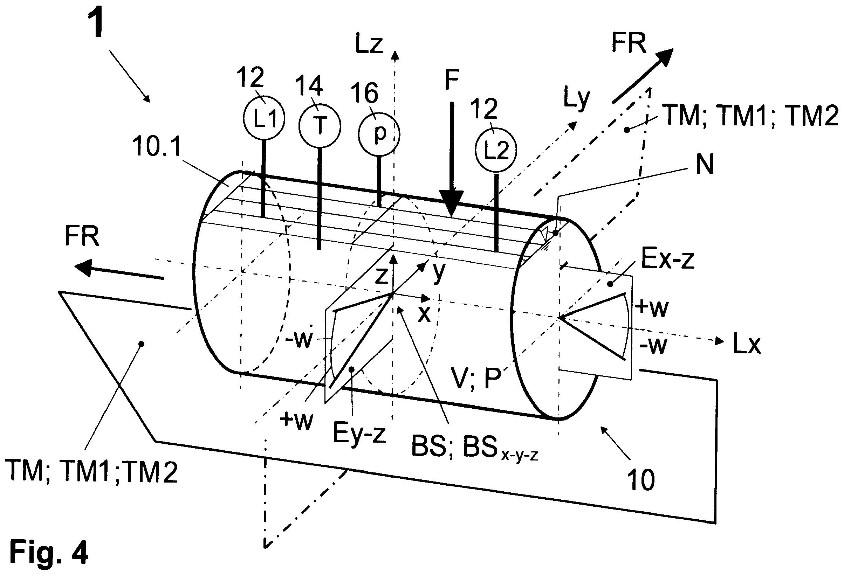

Um Wiederholungen zu vermeiden, stützt sich die nachfolgende Beschreibung zu den **Figuren 4, 6a, 6b** und **7** bis **9** hinsichtlich der verwendeten Bezugszeichen und Abkürzungen auf jene, die in den vorstehend beschriebenen **Figuren 1** bis **3, 5**, 5a bis **5g** Verwendung finden. Gleiches gilt hinsichtlich der vorstehend bereits beschriebenen Sachverhalte.

Am Kopfraum 10.1 des Behältnisses 10 mit dem ungeteilten Volumen V einer erfindungsgemäßen Transporteinrichtung 1 (**Figur 4**) ist eine zweite Einrichtung 16 zur Erfassung eines Drucks p eines gasförmigen, sterilen Fluids F angeordnet, das den Kopfraum 10.1 beaufschlagt. Die Füllstands-Messeinrichtung 12 weist neben der ersten Messsonde L1 eine zweite Messsonde L2 auf, wobei die erste und die zweite Messsonde L1, L2 im Abstand voneinander angeordnet sind und über den Kopfraum 10.1 in die freie Oberfläche N der hochwertigen Frischmilch P eingreifen.

Das Bezugssystem BS ist als ein orthogonales dreiachsiges Bezugssystem $BS_{x\text{-}y\text{-}z}$, bestehend aus der x-, y- und z-Achse, ausgebildet. In einer durch die x- und z-Achse aufgespannten Ebene $E_{x\text{-}z}$ und in einer durch die y- und z-Achse aufgespannten Ebene $E_{y\text{-}z}$ wird jeweils eine zugeordnete Neigung der freien Oberfläche N gemessen. Aus diesen der jeweiligen Ebene zugeordneten Neigungswinkeln +/-w, zwei orthogonal gewonnenen Messwerten, wird der maßgebliche räumliche Neigungswinkel +/-w ermittelt.

Das orthogonale dreiachsige Bezugssystem $BS_{x\text{-}y\text{-}z}$ ist durch die in x-Richtung orientierte erste Hauptachsen $L_x$, die in y-Richtung orientierte zweite Hauptachse $L_y$ und die in z-Richtung orientierte dritte Hauptachse $L_z$ des Behältnisses 10 gebildet. Dabei ist vorzugsweise entweder die erste Hauptachse $L_x$ oder die zweite Hauptachse $L_y$ in der Fahrtrichtung FR des Transportmittels TM bzw. TM1, TM2 orientiert. Weiterhin ist das Behältnis 10 in x-Richtung langgestreckt ausgebildet und in dieser Richtung liegend angeordnet.

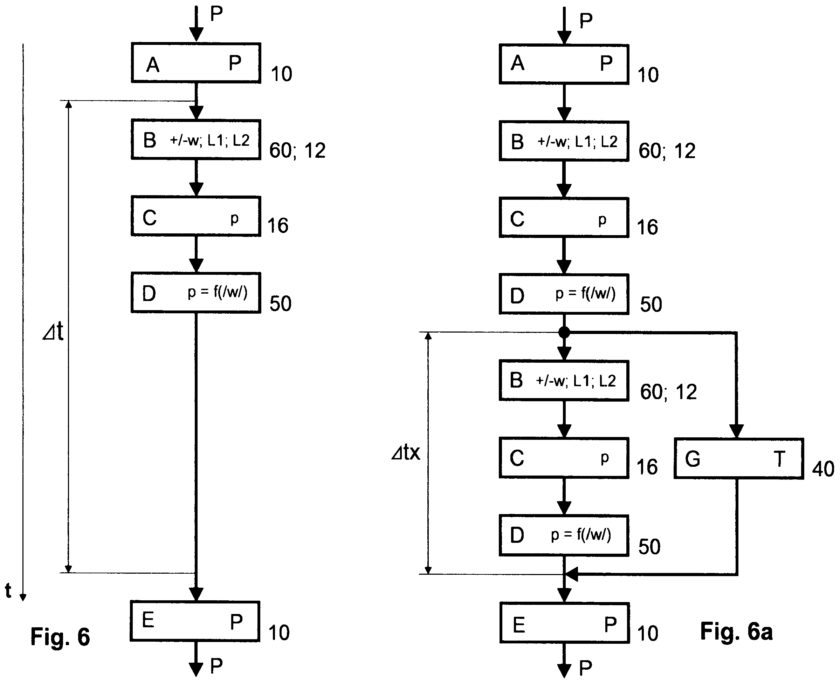

Das erfindungsgemäße Transportverfahren nach Anspruch 1 (**Figur 6**) umfasst die Schritte (A) bis (D), wobei Schritt (E), die Entleerung der hochwertigen Frischmilch P aus dem Behältnis 10, ohne weitere zeitlineare oder zeitgleich folgende Maßnahme dem Schritt (D) folgt. Im Anschluss an die Befüllung des Behältnisses 10 mit der hochwertigen Frischmilch P gemäß Schritt (A) und vor dem Schritt (E) ist in Richtung einer Zeit t die Bevorratungszeit $\Delta t$ eingetragen. Gemäß Schritt (B) werden in der ersten Einrichtung 60 der Neigungswinkel +/-w und gegebenenfalls parallel in der Füllstands-Messeinrichtung 12 mit der ersten und der zweiten Messsonde L1, L2 Schwappbewegungen der freien Oberfläche N ermittelt. Gemäß Schritt (C) wird in der zweiten Einrichtung 16 der Druck p im Kopfraum 10.1 erfasst, der dann gemäß Schritt (D) in Abhängigkeit vom und proportional zum Betrag |w| des Neigungswinkels +/-w (p = f(|w|)) durch Zufuhr des gasförmigen, sterilen Fluids F in den Kopfraum 10.1 erhöht wird.

Das erfindungsgemäße Transportverfahren nach Anspruch 2 (**Figur 6a**) unterscheidet sich von jenem nach Anspruch 1 (**Figur 6**) dadurch, dass gemäß Schritt (G) die nach der Befüllung vorliegende Frischmilch-Temperatur T in einem letzten zeitlichen Abschnitt $\Delta tx$ der Bevorratungszeit $\Delta t$ zur Verhinderung eventuellen psychrophilen Keimwachstums um eine zielführende Temperaturdifferenz mittels einer Kühleinrichtung 40 abgesenkt und auf diesem Niveau dann gehalten wird. Im Hinblick auf die Erhaltung der Fett-Eiweiß-Struktur hat sich eine Temperaturabsenkung von 3,5°C bis 4°C auf 2°C bis 2,5°C als zielführend herausgestellt. Schritt (G) flankiert zeitlich parallel die Schritte (B) bis (D).

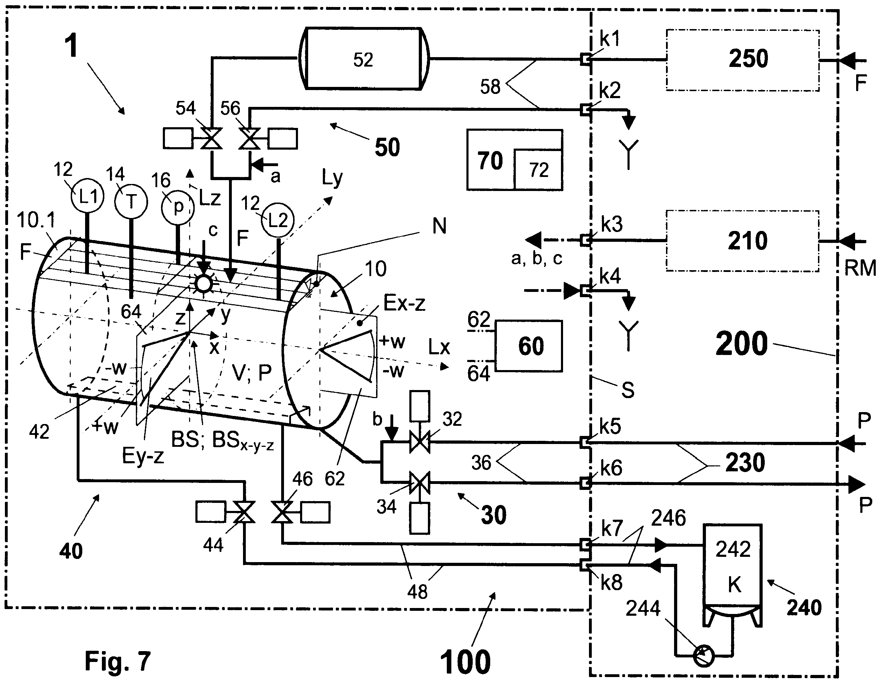

In **Figur 7** findet sich das Behältnis 10 uneingeschränkt wieder, wie es in der Beschreibung zu **Figur 4** dargestellt ist. Es weist das ungeteilte Volumen V mit mehreren Kubikmetern zur Bevorratung der hochwertigen Frischmilch P auf. Es ist die Temperatur-Messeinrichtung 14 zur Erfassung der Frischmilch-Temperatur T im Behältnis 10 vorgesehen. Weiterhin verfügt das Behältnis 10 über die Kühleinrichtung 40, die zumindest die gegenüber einer Umgebungs-Temperatur absenkte Frischmilch-Temperatur T konstant hält. Zu diesem Zweck befindet sich vorzugsweise im Fußbereich des Behältnisses 10 ein Wärmetauscher 42, der über eine dritte und eine vierte Ventileinrichtung 44, 46 und ein zweites Leitungssystem 48 mit einem Kühlmittel K versorgt werden kann. Die Abkühlung der hochwertigen Frischmilch P kann vor ihrer Befüllung vorzugsweise außerhalb der Transporteinrichtung 1 vorgenommen werden, beispielsweise über eine in einer Füll- und Entleerungsplattform 200 vorgesehene fünfte Einrichtung 240, die einen Kühlmittelbehälter 242 mit dem Kühlmittel K, eine Kühlmittelpumpe 244 und Kühlmittelleitungen 246 aufweist. Über lösbare Verbindungsstellen k7, k8 an einer Schnitt- und Kupplungsstelle S zwischen der Füll- und Entleerungsplattform 200 und der Transporteinrichtung 1 ist die Kühleinrichtung 40 über ihre Kühlmittelleitungen 246 mit dem zugeordneten zweiten Leitungssystem 48 verbunden. Während des Transportes kann die Frischmilch-Temperatur T über eine nicht dargestellte, autark innerhalb der Transporteinrichtung 1 betriebene Kühleinrichtung mit der vorbeschriebenen Kühleinrichtung 40 verbunden werden.

Das Behältnis 10 ist in Verbindung mit einer Befüllungs- und der Entleerungseinrichtung 30 so eingerichtet, dass eine umfassende sterile Behandlung der hochwertigen Frischmilch P erfolgt. Die Befüllungs- und Entleerungseinrichtung 30 weist eine erste und eine zweite Ventileinrichtung 32, 34 auf, die über ein erstes Leitungssystem 36 und zugeordnete lösbare Verbindungsstellen k5, k6 an der Schnitt- und Kupplungsstelle S mit einer zugeordneten Füll- und Entleerungsleitung 230 in der Füll- und Entleerungsplattform 200 verbunden sind. Über die Füll- und Entleerungsleitung 230 wird die hochwertige Frischmilch P zunächst der Füll- und Entleerungsplattform 200 und von da aus der Transporteinrichtung 1 zugeführt.

Die Transporteinrichtung 1 umfasst weiterhin eine erste Einrichtung 60 mit wenigstens einem ersten Neigungsmesser 62 zur Erfassung eines Neigungswinkel +/-w, der zwischen der zum Kopfraum 10.1 hin ausgebildeten freien Oberfläche N der hochwertigen Frischmilch P und einem auf das Behältnis 10 bezogenen Bezugssystem BS gebildet ist. in einer bevorzugten Ausbildung ist ein zweiter Neigungsmesser 64 im Bezugssystem BS vorgesehen sind, das vorzugsweise ein orthogonales dreiachsiges Bezugssystem $BS_{x\text{-}y\text{-}z}$ ist, bestehend aus einer x-, y- und z-Achse. Der erste Neigungsmesser 62 misst die Neigung der freien Oberfläche N in der durch die x- und z-Achse aufgespannten ersten Ebene $E_{x\text{-}z}$. Der zweite Neigungsmesser 64 misst die Neigung der freien Oberfläche N in der durch die y- und z-Achse aufgespannten zweiten Ebene $E_{y\text{-}z}$. Eine Steuereinrichtung 70 ermittelt den maßgeblichen Neigungswinkel +/-w aus den beiden orthogonalen Messwerten des ersten und des zweiten Neigungsmessers 62, 64.

In der Transporteinrichtung 1 ist weiterhin eine dritte Einrichtung 50 zur Zufuhr des gasförmigen, sterilen Fluids F in den Kopfraum 10.1 unter sterilen Bedingungen vorgesehen, wobei die dritte Einrichtung 50 einen Pufferbehälter 52, eine fünfte und sechste Ventileinrichtung 54, 56 sowie ein zugeordnetes drittes Leitungssystem 58 aufweist. Das dritte Leitungssystem 58 ist über lösbare Verbindungsstellen k1, k2 an der Schnitt- und Kupplungsstelle S mit einer sechsten Einrichtung 250 zur Bereitstellung des gasförmigen, sterilen Fluids F mittels der Füll- und Entleerungsplattform 200 verbunden. Der Pufferbehälter 52, der zweckmäßig mit einem auf die Größe des Kopfraumes 10.1 abgestimmten Puffervolumen bemessen ist, ist wahlweise mit dem Kopfraum 10.1 verbunden, wobei in dem Pufferbehälter 52 das gasförmige, sterile Fluid F vorzugsweise mit einem Überdruck von 4 bar gespeichert ist.

Zur Herstellung steriler Innenbereiche des Behältnisses 10 und steriler Bedingungen in allen mit diesen Innenbereichen verbundenen Einrichtungen der Transporteinrichtung 1 ist in der Füll- und Entleerungsplattform 200 eine vierte Einrichtung 210 zur Bereitstellung notwendiger Reinigungsmittel RM (Wasser, Säure, Lauge, Dampf und gasförmige, sterile Fluide) vorgesehen. Die vierte Einrichtung 210 ist über lösbare Verbindungsstellen k3, k4 an der Schnitt- und Kupplungsstelle S der Füll- und Entleerungsplattform 200 mit einem ersten, einem zweiten und einem dritten Reinigungsmittel-Anschluss a, b, c der Transporteinrichtung 1 verbunden. Über den ersten Reinigungsmittel-Anschluss a im Bereich der Ventileinrichtungen 54, 56 wird eine Reinigung der dritten Einrichtung 50 bis in den Kopfraum 10.1 hinein vorgenommen. Über den zweiten Reinigungsmittel-Anschluss b im Bereich der Ventileinrichtungen 32, 34 erfolgt eine Reinigung der Befüllungs- und Entleerungseinrichtung 30, ebenfalls bis in das Behältnis 10 hinein. Der gesamte Innenraum des Behältnisses 10 wird über ein nicht bezeichnetes Reinigungsmittel-Verteilungssystem, beispielsweise mehrere sogenannte Sprühkugeln, von denen eine schematisch angedeutet ist, über den dritten Reinigungsmittel-Anschluss c mit Reinigungsmittel RM versorgt.

Die Steuereinrichtung 70 steuert unter anderem eine Erhöhung des Druckes p in Abhängigkeit vom und proportional zum Betrag des Neigungswinkels +/-w durch Zufuhr des gasförmigen, sterilen Fluids F in den Kopfraum 10.1. Die Steuereinrichtung 70 weist einen Datenspeicher 72 auf, in dem ein Neigungswinkelbereich +/-$\Delta w_{max}$ zwischen einem maximalen negativen Neigungswinkel -$w_{max}$ und einem maximalen positiven Neigungswinkel +$w_{max}$ für den Neigungswinkel +/-w hinterlegt ist. Weiterhin ist dort ein zulässiger Druckbereich $\Delta p$ zwischen einem minimalen Druck $p_{min}$ und

einem maximalen Druck $p_{max}$ für den Druck p hinterlegt. Die Steuereinrichtung 70 ist dabei derart eingerichtet, dass der zulässige Druckbereich $\Delta p$ mit dem Betrag des Neigungswinkelbereichs $+/-\Delta w_{max}$ korreliert.

Die Steuerungseinrichtung 70 ist in Verbindung mit ihrem Datenspeicher 72 darüber hinaus so eingerichtet, dass sie Messwerte der Frischmilch-Temperatur T und der detektierten Füllstände im Behältnis 10 verarbeiten und Stelleinrichtungen für die Zufuhr des gasförmigen, sterilen Fluids F und die Kühleinrichtung 40 ansteuern kann.

Die Füllstands-Messeinrichtung 12 verfügt vorteilhaft über die zweite Messsonde L2, wobei die erste und die zweite Messsonde L1, L2 im Abstand voneinander angeordnet sind und über den Kopfraum 10.1 in die freie Oberfläche N der hochwertigen Frischmilch P eingreifen. Aus einer unterschiedlichen Benetzung bei Schwappbewegungen der hochwertigen Frischmilch P lässt sich bei entsprechend eingerichteter Steuerung diese Schwappbewegung detektieren und ermitteln.

Die Füll- und Entleerungsplattform 200 bildet zusammen mit der Transporteinrichtung 1 ein System 100, das insgesamt die Befüllung und die Entleerung des Behältnisses 10, seine Kühlung, die Zufuhr des gasförmigen, sterilen Fluids F zum Pufferbehälter 52 und von dort zum Behälter 10 und die Reinigung und Sterilisierung der gesamten Transporteinrichtung 1, jeweils stets und umfänglich unter sterilen Bedingen, sicherstellt.

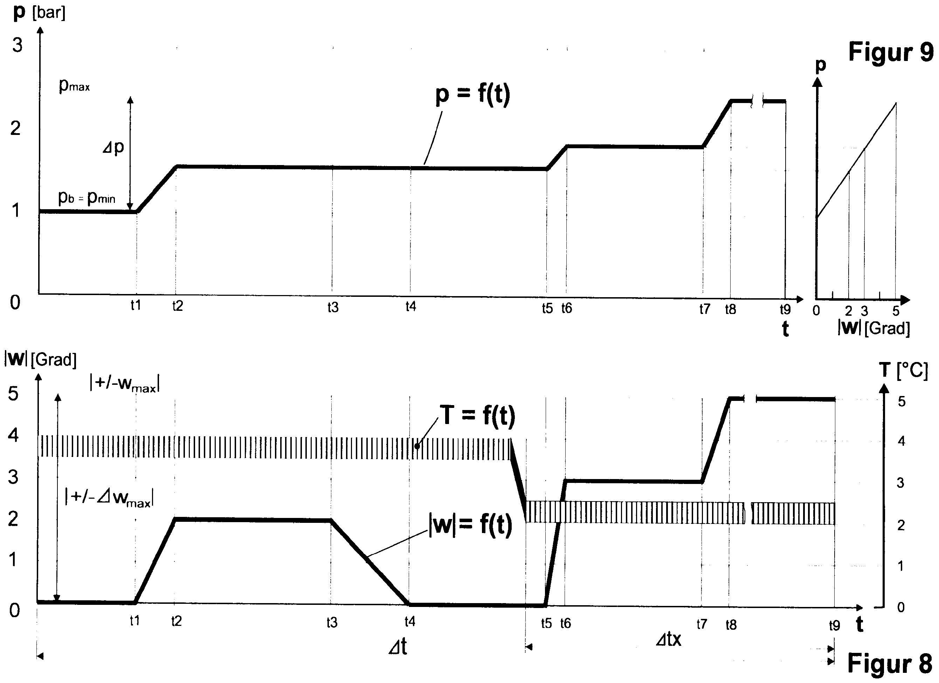

In **Figur 8** ist beispielhaft ein zeitlicher Verlauf ($|w| = f(t)$) eines Betrags $|w|$ des Neigungswinkels $+/-w$ postuliert. Markante Änderungen des Verlaufs sind auf der Abszisse, der Zeit t, innerhalb der Bevorratungszeit $\Delta t$ mit Zeiten t1 bis t9 markiert. Auf der linken Ordinate umfasst ein angenommener Wertevorrat des Betrages $|w|$ des Neigungswinkels die Werte 0 bis $+/- w_{max}$ = 5 Grad, wodurch der Betrag des Neigungswinkelbereichs $|+/-\Delta w_{max}|$ = 5 Grad beträgt. Dies ist ein durchaus realistischer Bereich, der in Extremsituationen auch größer sein kann. Auf der rechten Ordinate ist die Frischmilch-Temperatur T mit einem Wertevorrat von 0 bis 5 °C aufgetragen. In dem letzten zeitlichen Abschnitt $\Delta tx$ der Bevorratungszeit $\Delta t$, beispielhaft zu einem vor der Zeit t5 liegenden Zeitpunkt, wird die Frischmilch-Temperatur T von 3,5°C bis 4°C (Bandbreite) auf 2°C bis 2,5°C (Bandbreite) abgesenkt.

**Figur 9** zeigt beispielhaft einen zeitlichen Verlauf ($p = f(t)$) des absoluten Druckes p (Atmosphärendruck $p_b$ zuzüglich des Überdruckes) im Kopfraum 10.1 des Behältnisses 10, wobei die Zeiten t1 bis t9 auf der Abszisse, der Zeitachse t, deckungsgleich mit jenen im Diagramm der **Figur 8** sind. In einem am rechten Rand der **Figur 9** aufgetragenen Hilfsdiagramm $p = f(|w|)$ ist die erfindungsgemäße Zuordnung zwischen dem Druck p und dem Betrag des Neigungswinkels $|w|$ ersichtlich, der vorzugsweise darin besteht, dass der zulässige Druckbereich $\Delta p$ mit dem Betrag des Neigungswinkelbereichs $+/-\Delta w_{max}$ korreliert. Aus den **Figuren 8** und **9** ergibt sich die Zuordnung zwischen dem unabhängigen Neigungswinkel $+/-w$ und dem abhängigen Druck p. Es ist weiterhin aus den **Figuren 8** und **9** die erfindungsgemäße Festlegung erkennbar, dass der Druck p dem zeitlichen Verlauf des Betrages des erfassten Neigungswinkels $+/-w$ immer nur dann folgt, wenn ein nachfolgender Betrag des erfassten Neigungswinkels $+/-w$ gleich oder größer als ein vorhergehender Betrag ist ($|w| = f(t)$). Im dargestellten Ausführungsbeispiel entspricht der minimale Druck $p_{min}$ dem Atmosphärendruck $p_b$ und der maximale Druck $p_{max}$ beträgt beispielsweise 1,4 bar Überdruck. Der zulässige Druckbereich $\Delta p = p_{max} - p_{min}$ bemisst sich dann zu 1,4 bar. Der minimale Druck $p_{min}$ kann mit Beginn der Bevorratungszeit $\Delta t$ auch höher angesetzt werden, beispielsweise mit 0,4 bis 0,6 bar Überdruck.

BEZUGSZEICHENLISTE DER VERWENDETEN ABKÜRZUNGEN

**Figuren 1, 2, 2a, 3, 3a**   (zum Stand der Technik)
1*                 Transporteinrichtung

10        Behältnis
10.1      Kopfraum
10a       kreisförmige Behälterform
10b       elliptische Behälterform
10c       kofferförmige Behälterform
10d       Isolierung

12        Füllstands-Messeinrichtung
14        Temperatur-Messeinrichtung
30*       Befüllungs- und Entleerungseinrichtung
40*       Kühleinrichtung

BS        Bezugssystem (geometrisches)
F*        gasförmiges Fluid
FR        Fahrtrichtung

L1 erste Messsonde

Lx erste Hauptachse
Ly zweite Hauptachse
Lz dritte Hauptachse

N freie Oberfläche
P hochwertige Frischmilch
RA Aufrahmungsschicht
T Frischmilch-Temperatur

TM Transportmittel (allgemein)
TM1 erdgebundenes Transportmittel
TM2 Schiff

V ungeteiltes Volumen

Schiffsbewegungen

GI Gieren
RO Rollen
SL Slamming
ST Stampfen
SW Schwoien
TA Tauchen
WO Wogen

+/-w Neigungswinkel (gemessen gegen eine Bezugsachse)
x, y, z Raumachsen

Physikalische Größen für die rechnerischen Abschätzungen

$A_K$ Kugelquerschnitt
$F_A$ Auftriebskraft
$F_R$ Reibungskraft
$\Delta F$ resultierende Kraft zwischen Auftriebs- und Reibungskraft
Re Reynolds-Zahl
$V_K$ Kugelvolumen
d Kugeldurchmesser
g Erdbeschleunigung
v Auftriebsgeschwindigkeit
$\zeta$ Widerstandsbeiwert
$\eta$ dynamische Zähigkeit
$\pi$ Verhältnis zwischen Umfang und Durchmesser der Blase
$\rho$ Dichte der Flüssigkeit

**Figuren 4** bis **9** (Erfindung)

1 Transporteinrichtung
100 System

16 zweite Einrichtung (Erfassung des Druckes p)

| 30 | Befüllungs- und Entleerungseinrichtung |
|----|----|
| 32 | erste Ventileinrichtung |
| 34 | zweite Ventileinrichtung |
| 36 | erstes Leitungssystem |

| 40 | Kühleinrichtung |
|----|----|
| 42 | Wärmetauscher |
| 44 | dritte Ventileinrichtung |
| 46 | vierte Ventileinrichtung |
| 48 | zweites Leitungssystem |

| 50 | dritte Einrichtung (Zufuhr und Abfuhr des Fluids F) |
|----|----|
| 52 | Pufferbehälter |
| 54 | fünfte Ventileinrichtung |
| 56 | sechste Ventileinrichtung |
| 58 | drittes Leitungssystem |

| 60 | erste Einrichtung (Erfassung des Neigungswinkels +/-w) |
|----|----|
| 62 | erster Neigungsmesser |
| 64 | zweiter Neigungsmesser |

| 70 | Steuereinrichtung |
|----|----|
| 72 | Datenspeicher |

| 200 | Füll- und Entleerungsplattform |
|----|----|

| 210 | vierte Einrichtung (Bereitstellung von Reinigungsmittel RM) |
|----|----|
| 230 | Füll- und Entleerungsleitung |
| 240 | fünfte Einrichtung (Bereitstellung von Kühlmittel) |
| 242 | Kühlmittelbehälter |
| 244 | Kühlmittelpumpe |
| 246 | Kühlmittelleitungen |

| 250 | sechste Einrichtung (Bereitstellung von gasförmigem, sterilem Fluid F) |
|----|----|

| A1 | Äquivalenzfläche |
|----|----|
| ΔA | Differenzfläche |

| $BS_{x-y-z}$ | orthogonales Bezugssystem |
|----|----|

| $E_{x-z}$ | x-z-Ebene |
|----|----|
| $E_{y-z}$ | y-z-Ebene |

| F | gasförmiges, steriles Fluid |
|----|----|
| K | Kühlmittel |
| L2 | zweite Messsonde (der Füllstands-Messeinrichtung 12) |
| RM | Reinigungsmittel |
| S | Schnitt- und Kupplungsstelle |

| a | erster Reinigungsmittel-Anschluss |
|----|----|
| b | zweiter Reinigungsmittel-Anschluss |
| c | dritter Reinigungsmittel-Anschluss |

| k1 bis k8 | lösbare Verbindungsstellen |
|----|----|

| p | Druck (im Kopfraum 10.1) |
|----|----|
| $p_{max}$ | maximaler Druck |
| $p_{min}$ | minimaler Druck |

| $\Delta p$ | zulässiger Druckbereich ($\Delta p = p_{max} - p_{min}$) |
| $p_b$ | Atmosphärendruck |
| s1 | erste Sehne |
| s2 | zweite Sehne |
| t | Zeit, allgemein |
| t1 bis t9 | Zeiten (Abfolge von Zeiten in der Bevorratungszeit $\Delta t$) |
| $\Delta t$ | Bevorratungszeit |
| $\Delta tx$ | letzter, zeitlicher Abschnitt |
| $+/-\Delta w_{max}$ | Neigungswinkelbereich ($+\Delta w_{max} = +w_{max}$; $-\Delta w_{max} = -Wmax$) |
| $+w_{max}$ | maximaler positiver Neigungswinkel |
| $-w_{max}$ | maximaler negativer Neigungswinkel |
| $|w|$ | Betrag des Neigungswinkels $+/-w$ |

**Patentansprüche**

1. Transportverfahren für hochwertige Frischmilch (P) unter transport- und umgebungskritischen Transportbedingungen, umfassend

  • eine Bevorratung der hochwertigen Frischmilch (P)

    ◦ durch Befüllung eines Behältnisses (10), das ein ungeteiltes Volumen (V) mit mehreren Kubikmetern aufweist,
    ◦ mit einer Frischmilch-Temperatur (T), die gegenüber einer Umgebungs-Temperatur abgesenkt ist,
    ◦ mit einem Kopfraum (10.1) im Behältnis (10), der mit einem gasförmigen Fluid (F*) beaufschlagt ist;

  • einen Transport der hochwertigen Frischmilch (P) mit einem Transportmittel (TM), das als ein erdgebundenes Transportmittel (TM1) und/oder als ein Schiff (TM2) ausgebildet ist;
  • eine Entleerung der hochwertigen Frischmilch (P) aus dem Behältnis (10); wobei das Transportverfahren die folgenden Schritte umfasst:

    (A) eine Befüllung des Behältnisses (10) mit der hochwertigen Frischmilch (P) unter sterilen Bedingungen und
    in einer Bevorratungszeit ($\Delta t$), die einen Zeitraum nach der Befüllung bis zu der Entleerung des Behältnisses (10) umfasst,
    (B) eine Erfassung eines Neigungswinkels ($+/-w$), der zwischen einer zum Kopfraum (10.1) hin ausgebildeten freien Oberfläche (N) der hochwertigen Frischmilch (P) und einem auf das Behältnis (10) bezogenen Bezugssystem (BS) gebildet ist;
    (C) eine Erfassung eines Druckes (p) im Kopfraum (10.1);
    (D) eine Erhöhung des Druckes (p) in Abhängigkeit vom und proportional zum Betrag des Neigungswinkels ($+/-w$) durch Zufuhr eines gasförmigen, sterilen Fluids (F) in den Kopfraum (10.1) unter sterilen Bedingungen und
    (E) die Entleerung der hochwertigen Frischmilch (P) aus dem Behältnis (10) unter sterilen Bedingungen.

2. Transportverfahren nach Anspruch 1,
   **gekennzeichnet durch** folgenden Schritt:
   (G) eine Absenkung der Frischmilch-Temperatur (T) in einem letzten zeitlichen Abschnitt ($\Delta tx$) der Bevorratungszeit ($\Delta t$) von 3,5°C bis 4°C auf 2°C bis 2,5°C.

3. Transportverfahren nach Anspruch 2,
   **dadurch gekennzeichnet,**
   **dass** der letzte Abschnitt ($\Delta tx$) einem Drittel der Bevorratungszeit ($\Delta t$) entspricht.

4. Transportverfahren nach einem der Ansprüche 1 bis 3,
   **gekennzeichnet**

• **durch** Vorgabe eines Neigungswinkelbereichs (+/-$\Delta w_{max}$), der jeweils durch einen maximalen negativen Neigungswinkel (-$w_{max}$) oder einen maximalen positiven Neigungswinkel (+$w_{max}$) für den Neigungswinkel (+/-w) gebildet ist, und

• **durch** Vorgabe eines zulässigen Druckbereichs ($\Delta p$) zwischen einem minimalen Druck ($p_{min}$) und einem maximalen Druck ($p_{max}$) für den Druck (p) im Kopfraum (10.1),

• wobei der zulässige Druckbereich ($\Delta p$) mit dem Betrag des Neigungswinkelbereichs (+/-$\Delta w_{max}$) korreliert.

5. Transportverfahren nach Anspruch 4,
**dadurch gekennzeichnet,**
**dass** der Druckbereich ($\Delta p$) mit bis zu 1,4 bar Überdruck bemessen ist.

6. Transportverfahren nach einem der Ansprüche 1 bis 5,
**dadurch gekennzeichnet,**
**dass** der Druck (p) dem zeitlichen Verlauf des Betrages des erfassten Neigungswinkels (+/-w) immer nur dann folgt, wenn ein nachfolgender Betrag des erfassten Neigungswinkels (+/-w) gleich oder größer als ein vorhergehender Betrag ist.

7. Transportverfahren nach einem der Ansprüche 1 bis 6,
**dadurch gekennzeichnet,**

• **dass** das Bezugssystem (BS) ein orthogonales dreiachsiges Bezugssystem ($BS_{x-y-z}$) ist, bestehend aus einer x-, y- und z-Achse,

• **dass** die Neigung der freien Oberfläche (N) jeweils in einer durch die x- und z-Achse sowie in einer durch die y- und z-Achse aufgespannten Ebene ($E_{x-2}$; $E_{y-z}$) gemessen und

• **dass** der Neigungswinkel (+/-w) aus diesen beiden orthogonalen Messwerten ermittelt wird.

8. Transportverfahren nach Anspruch 7,
**dadurch gekennzeichnet,**
**dass** das orthogonale dreiachsige Bezugssystem ($BS_{x-y-z}$) durch eine in x-Richtung orientierte erste Hauptachsen ($L_x$), eine in y-Richtung orientierte zweite Hauptachse ($L_y$) und eine in z-Richtung orientierte dritte Hauptachse ($L_z$) des Behältnisses (10) gebildet ist.

9. Transportverfahren nach Anspruch 8,
**dadurch gekennzeichnet,**
**dass** entweder die erste Hauptachse ($L_x$) oder die zweite Hauptachse ($L_y$) in einer Fahrtrichtung (FR) des Transportmittels (TM; TM1, TM2) orientiert ist.

10. Transportverfahren nach einem der Ansprüche 1 bis 9,
**dadurch gekennzeichnet,**
**dass** eine Füllstands-Messeinrichtung (12) zur Erfassung des Füllstandes der hochwertigen Frischmilch (P) im Behältnis (10) derart eingerichtet ist, dass zwei Messsonden (L1, L2), die im Abstand voneinander in die freie Oberfläche (N) eintauchen, eine Schwappbewegung der freien Oberfläche (N) aus dem unterschiedlichen Grad ihrer Benetzung quantitativ ermitteln.

11. Transporteinrichtung für hochwertige Frischmilch (P) unter transport- und umgebungskritischen Transportbedingungen, umfassend

• ein Behältnis (10), das ein ungeteiltes Volumen (V) mit mehreren Kubikmetern zur Bevorratung der hochwertigen Frischmilch (P) aufweist;

• eine Befüllungs- und eine Entleerungseinrichtung (30*) zur Befüllung des Behältnisses (10) mit und zur Entleerung der hochwertigen Frischmilch (P) aus dem Behältnis (10);

• einen Kopfraum (10.1) im Behältnis (10), der mit einem gasförmigen Fluid (F*) beaufschlagbar ist,

• eine Temperatur-Messeinrichtung (14) zur Erfassung einer Frischmilch-Temperatur (T) im Behältnis (10,

• eine Füllstands-Messeinrichtung (12) mit einer ersten Messsonde (L1),

• eine Kühleinrichtung (40*), die zumindest die gegenüber einer Umgebungs-Temperatur absenkte Frischmilch-Temperatur (T) konstant hält,

• ein Transportmittel (TM) zum Transport des Behältnisses (10) in Gestalt eines erdgebundenen Transportmittels (TM1) und/oder eines Schiffes (TM2), wobei

• das Behältnis (10), das in Verbindung mit einer Befüllungs- und der Entleerungseinrichtung (30) so eingerichtet ist, dass eine umfassende sterile Behandlung der hochwertigen Frischmilch (P) erfolgen kann;
• eine erste Einrichtung (60) mit wenigstens einem ersten Neigungsmesser (62) zur Erfassung eines Neigungswinkel (+/-w), der zwischen einer zum Kopfraum (10.1) hin ausgebildeten freien Oberfläche (N) der hochwertigen Frischmilch (P) und einem auf das Behältnis (10) bezogenen Bezugssystem (BS) gebildet ist;
• eine zweite Einrichtung (16) zur Erfassung eines Druckes (p) im Kopfraum (10.1);
• eine dritte Einrichtung (50) zur Zufuhr eines gasförmigen, sterilen Fluids (F) in den Kopfraum (10.1) unter sterilen Bedingungen;
• eine Steuereinrichtung (70), die eine Erhöhung des Druckes (p) in Abhängigkeit vom und proportional zum Betrag des Neigungswinkels (+/-w) durch Zufuhr des gasförmigen, sterilen Fluids (F) in den Kopfraum (10.1) steuern kann.

**12.** Transporteinrichtung nach Anspruch 11,
**dadurch gekennzeichnet,**
**dass** die Steuereinrichtung (70) einen Datenspeicher (72) aufweist, in dem

• ein Neigungswinkelbereich ($+/-\Delta w_{max}$) zwischen einem maximalen negativen Neigungswinkel ($-w_{max}$) und einem maximalen positiven Neigungswinkel ($+w_{max}$) für den Neigungswinkel (+/-w) hinterlegt ist,
• ein zulässiger Druckbereich ($\Delta p$) zwischen einem minimalen Druck ($p_{min}$) und einem maximalen Druck ($p_{max}$) für den Druck (p) hinterlegt ist,
• wobei der zulässige Druckbereich ($\Delta p$) mit dem Betrag des Neigungswinkelbereichs ($+/-\Delta w_{max}$) korreliert.

**13.** Transporteinrichtung nach Anspruch 11 oder 12,
**dadurch gekennzeichnet,**

• **dass** zwei Neigungsmesser (62, 64) im Bezugssystem (BS) vorgesehen sind, das ein orthogonales dreiachsiges Bezugssystem ($BS_{x-y-z}$) ist, bestehend aus einer x-, y- und z-Achse,
• **dass** der erste Neigungsmesser (62) die Neigung der freien Oberfläche (N) in einer durch die x- und z-Achse aufgespannten ersten Ebene ($E_{x-z}$) und
• **dass** ein zweiter Neigungsmesser (64) die Neigung der freien Oberfläche (N) in einer durch die y- und z-Achse aufgespannten zweiten Ebene ($E_{y-z}$) misst und
• **dass** die Steuereinrichtung (70) den Neigungswinkel (+/-w) aus den beiden orthogonalen Messwerten des ersten und des zweiten Neigungsmessers (62, 64) ermittelt.

**14.** Transporteinrichtung nach Anspruch 13,
**dadurch gekennzeichnet,**
**dass** das orthogonale dreiachsige Bezugssystem ($BS_{x-y-z}$) durch eine in x-Richtung orientierte erste Hauptachsen ($L_x$), eine in y-Richtung orientierte zweite Hauptachse ($L_y$) und eine in z-Richtung orientierte dritte Hauptachse ($L_z$) des Behältnisses (10) gebildet ist.

**15.** Transporteinrichtung nach Anspruch 14,
**dadurch gekennzeichnet,**
**dass** entweder die erste Hauptachse ($L_x$) oder die zweite Hauptachse ($L_y$) in einer Fahrtrichtung (FR) des Transportmittels (TM; TM1, TM2) orientiert ist.

**16.** Transporteinrichtung nach einem der Ansprüche 13 bis
**dadurch gekennzeichnet,**
**dass** das Behältnis (10) in x-Richtung langgestreckt ausgebildet und in dieser Richtung liegend angeordnet ist.

**17.** Transporteinrichtung nach einem der Ansprüche 11 bis
**dadurch gekennzeichnet,**
**dass** das Volumen (V) des Behältnisses (10) gleich oder größer als 20 m$^3$ (V $\geq$ 20 m$^3$) ist.

**18.** Transporteinrichtung nach einem der Ansprüche 11 bis
**dadurch gekennzeichnet,**
**dass** die Füllstands-Messeinrichtung (12) eine zweite Messsonde (L2) aufweist, wobei die erste und die zweite Messsonde (L1, L2) im Abstand voneinander angeordnet sind und über den Kopfraum (10.1) in die freie Oberfläche (N) der hochwertigen Frischmilch (P) eingreifen.

**19.** Transporteinrichtung nach einem der Ansprüche 11 bis 18,
**dadurch gekennzeichnet,**
**dass** ein Pufferbehälter (52) mit einem auf die Größe des Kopfraumes (10.1) abgestimmten Puffervolumen vorgesehen ist, der wahlweise mit dem Kopfraum (10.1) verbunden und in dem das gasförmige, sterile Fluid (F) mit einem Überdruck von 4 bar gespeichert ist.

**20.** System (100) mit einer Transporteinrichtung (1) nach einem der Ansprüche 11 bis 19,
**dadurch gekennzeichnet,**

• **dass** das System (100) eine Füll- und Entleerungsplattform (200) aufweist,
• **dass** die Füll- und Entleerungsplattform (200) die folgenden Funktionseinrichtungen (210, 230, 240, 250) umfasst:

• eine vierte Einrichtung (210) zur Bereitstellung von Reinigungsmitteln (RM),
• Füll- und Entleerungsleitungen (230),
• eine fünfte Einrichtung (240) zur Bereitstellung von Kühlmittel (K) und
• eine sechste Einrichtung (250) zur Bereitstellung von gasförmigem, sterilem Fluid (F),

und **dass** über eine Schnitt- und Kupplungsstelle (S) die
• die vierte Einrichtung (210) mit den Reinigungsmittel-Anschlüssen (a, b, c),
• die Füll- und Entleerungsleitungen (230) mit der Befüll- und Entleerungseinrichtung (30),
• die fünfte Einrichtung (240) mit der Kühleinrichtung (40) und
• die sechste Einrichtung (250) mit der dritten Einrichtung (50) verbunden ist.

**Claims**

**1.** A transport method for high-quality fresh milk (P) under transport- and environment-critical transport conditions, comprising

• storing the high-quality fresh milk (P)

• by filling a container (10) that has an undivided volume (V) of several cubic meters,
• at a fresh milk temperature (T) that is lowered with respect to an ambient temperature,
• with a headspace (10.1) in the container (10) to which a gaseous fluid (F*) is applied;

• transporting the high-quality fresh milk (P) with a transport means (TM) that is designed as an earthbound transport means (TM1) and/or as a boat (TM2);
• emptying the high-quality fresh milk (P) out of the container (10);

wherein the transport method comprises the following steps:

(A) filling the container (10) with the high-quality fresh milk (P) under sterile conditions and within a storage time ($\Delta$t) including a period of time between the filling and the emptying of the container (10),
(B) detecting an angle of inclination (+/-w) that is formed between a free surface (N) of the high-quality fresh milk (P) formed towards the headspace (10.1) and a reference system (BS) pertaining to the container (10);
(C) detecting a pressure (p) in the headspace (10.1);
(D) increasing the pressure (p) as a function of and in proportion to the value of the angle of inclination (+/-w) by supplying a gaseous, sterile fluid (F) into the headspace (10.1) under sterile conditions, and
(E) emptying the high-quality fresh milk (P) out of the container (10) under sterile conditions.

**2.** The transport method according to claim 1,
**characterized by** the following step:
(G) lowering the fresh milk temperature (T) in a final time segment ($\Delta$tx) of the storage time ($\Delta$t) from between 3.5°C and 4°C to between 2°C and 2.5°C.

**3.** The transport method according to claim 2,
**characterized in that**

the final time segment ($\Delta tx$) corresponds to one third of the storage time ($\Delta t$).

4. The transport method according to any one of claims 1 to 3,
**characterized**

• **by** specifying an angle of inclination range ($+/-\Delta w_{max}$) that is in each case formed by a maximum negative angle of inclination ($-w_{max}$) or a maximum positive angle of inclination ($+w_{max}$) for the angle of inclination ($+/-w$), and
• by specifying a permissible pressure range ($\Delta p$) between a minimum pressure ($p_{min}$) and a maximum pressure ($p_{max}$) for the pressure (p) in the headspace (10.1),
• wherein the permissible pressure range ($\Delta p$) correlates with the value of the angle of inclination range ($+/-\Delta w_{max}$).

5. The transport method according to claim 4,
**characterized in that**
the pressure range ($\Delta p$) extends up to 1.4 bar of overpressure.

6. The transport method according to any one of claims 1 to 5,
**characterized in that**
the pressure (p) only ever follows the temporal progression of the value of the detected angle of inclination ($+/-w$) if a subsequent value of the detected angle of inclination ($+/-w$) is greater than or equal to a previous value.

7. The transport method according to any one of claims 1 to 6,
**characterized in that**

• the reference system (BS) is an orthogonal three-axis reference system ($BS_{x-y-z}$) consisting of a x-, y- and z-axis,
• the inclination of the free surface (N) is measured in each case in a plane ($E_{x-z}$) spanned by the x- and z-axis and in a plane ($E_{y-z}$) spanned by the y- and z-axis, and
• the angle of inclination ($+/-w$) is determined from said two orthogonal measured values.

8. The transport method according to claim 7,
**characterized in that**
the orthogonal three-axis reference system ($BS_{x-y-z}$) is formed by a first main axis ($L_x$) oriented in the x-direction, a second main axis ($L_y$) oriented in the y-direction, and a third main axis ($L_z$) of the container (10) oriented in the z-direction.

9. The transport method according to claim 8,
**characterized in that**
either the first main axis ($L_x$) or the second main axis ($L_y$) is oriented in a travel direction (FR) of the transport means (TM; TM1, TM2).

10. The transport method according to any one of claims 1 to 9,
**characterized in that**
a fill level measuring apparatus (12) for detecting the fill level of the high-quality fresh milk (P) in the container (10) is configured such that two measuring probes (L1, L2) which plunge into the free surface (N) at a distance from one another quantitatively determine a sloshing movement of the free surface (N) based on the different degrees to which they are wetted.

11. A transport apparatus for high-quality fresh milk (P) under transport- and environment-critical transport conditions, comprising

• a container (10) which comprises an undivided volume (V) of several cubic meters for storing the high-quality fresh milk (P);
• a filling and emptying apparatus (30*) for filling the container (10) with and emptying the high-quality fresh milk (P) out of the container (10);
• a headspace (10.1) in the container (10) to which a gaseous fluid (F*) can be applied,
• a temperature measuring apparatus (14) for detecting a fresh milk temperature (T) in the container (10),
• a fill level measuring apparatus (12) having a first measuring probe (L1),

• a cooling apparatus (40*) which keeps constant at least the fresh milk temperature (T) that is lowered with respect to an ambient temperature,
• a transport means (TM) for transporting the container (10) in the form of an earthbound transport means (TM1) and/or a boat (TM2),
wherein
• the container (10), which is configured in conjunction with a filling and emptying apparatus (30) such that comprehensive sterile treatment of the high-quality fresh milk (P) can take place;
• a first apparatus (60) having at least one first inclinometer (62) for recording an angle of inclination (+/-w) that is formed between a free surface (N) of the high-quality fresh milk (P) formed towards the headspace (10.1) and a reference system (BS) pertaining to the container (10);
• a second apparatus (16) for detecting a pressure (p) in the headspace (10.1);
• a third apparatus (50) for supplying a gaseous, sterile fluid (F) in the headspace (10.1) under sterile conditions;
• a control apparatus (70) which can control an increase in the pressure (p) as a function of and in proportion to the value of the angle of inclination (+/-w) by supplying the gaseous, sterile fluid (F) into the headspace (10.1).

12. The transport apparatus according to claim 11,
**characterized in that**
the control apparatus (70) comprises a data memory (72) in which

• an angle of inclination range ($+/-\Delta w_{max}$) between a maximum negative angle of inclination ($-w_{max}$) and a maximum positive angle of inclination ($+w_{max}$) for the angle of inclination (+/-w) is stored,
• a permissible pressure range ($\Delta p$) between a minimum pressure ($p_{min}$) and a maximum pressure ($p_{max}$) for the pressure (p) is stored,
• wherein the permissible pressure range ($\Delta p$) correlates with the value of the angle of inclination range ($+/-\Delta w_{max}$).

13. The transport apparatus according to claim 11 or 12,
**characterized in that**

• two inclinometers (62, 64) are provided in the reference system (BS), which is an orthogonal three-axis reference system ($BS_{x-y-z}$) consisting of an x-, y- and z-axis,
• the first inclinometer (62) measures the inclination of the free surface (N) in a first plane ($E_{x-z}$) spanned by the x- and z-axis and
• a second inclinometer (64) measures the inclination of the free surface (N) in a second plane ($E_{y-z}$) spanned by the y- and z-axis and
• the control apparatus (70) determines the angle of inclination (+/-w) from the two orthogonal measured values of the first and second inclinometer (62, 64).

14. The transport apparatus according to claim 13,
**characterized in that**
the orthogonal three-axis reference system ($BS_{x-y-z}$) is formed by a first main axis ($L_x$) oriented in the x-direction, a second main axis ($L_y$) oriented in the y-direction, and a third main axis ($L_z$) of the container (10) oriented in the z-direction.

15. The transport apparatus according to claim 14,
**characterized in that**
either the first main axis ($L_x$) or the second main axis ($L_y$) is oriented in the travel direction (FR) of the transport means (TM; TM1, TM2).

16. The transport apparatus according to any one of claims 13 to 15,
**characterized in that**
the container (10) is elongate in the x-direction and arranged horizontally in this direction.

17. The transport apparatus according to any one of claims 11 to 16,
**characterized in that**
the volume (V) of the container (10) is greater than or equal to 20 m$^3$ (V $\geq$ 20 m$^3$).

18. The transport apparatus according to any one of claims 11 to 17,

**characterized in that**
the fill level measuring apparatus (12) comprises a second measuring probe (L2), wherein the first and second measuring probe (L1, L2) are arranged at a distance from one another and reach into the free surface (N) of the high-quality fresh milk (P) via the headspace (10.1).

19. The transport apparatus according to any one of claims 11 to 18,
**characterized in that**
a buffer tank (52) having a buffer volume that is adapted to the size of the headspace (10.1) is provided, which buffer tank is optionally connected to the headspace (10.1) and in which the gaseous, sterile fluid (F) is stored at an overpressure of 4 bar.

20. A system (100) comprising a transport apparatus (1) according to any one of claims 11 to 19,
**characterized in that**

   • the system (100) comprises a filling and emptying platform (200),
   • the filling and emptying platform (200) comprises the following functional apparatuses (210, 230, 240, 250):

      • a fourth apparatus (210) for providing cleaning agents (RM),
      • filling and emptying lines (230),
      • a fifth apparatus (240) for providing coolant (K) and
      • a sixth apparatus (250) for providing gaseous, sterile fluid (F),

   and **in that**, via an intersection and coupling point (S),
   • the fourth apparatus (210) is connected to the cleaning agent ports (a, b, c),
   • the filling and emptying lines (230) are connected to the filling and emptying apparatus (30),
   • the fifth apparatus (240) is connected to the cooling apparatus (40) and
   • the sixth apparatus (250) is connected to the third apparatus (50).

**Revendications**

1. Procédé de transport pour du lait frais de qualité supérieure (P) dans des conditions de transport critiques en termes de transport et d'environnement, comportant

   • un approvisionnement de lait frais de qualité supérieure (P),

      ○ par remplissage d'un récipient (10) présentant un volume non divisé (V) de plusieurs mètres cubes,
      ○ à une température de lait frais (T) réduite par rapport à une température ambiante,
      ○ avec un espace libre (10.1) dans le récipient (10), lequel est alimenté avec un fluide gazeux (F*) ;

   • un transport du lait frais de qualité supérieure (P) à l'aide d'un moyen de transport (TM) conçu comme un moyen de transport terrestre (TM1) et/ou comme un bateau (TM2) ;
   • un déchargement du lait frais de qualité supérieure (P) hors du récipient (10) ;

   dans lequel le procédé de transport comporte les étapes suivantes :

      (A) un remplissage du récipient (10) avec le lait frais de qualité supérieure (P) dans des conditions stériles et pendant un temps d'approvisionnement ($\Delta t$) comportant une durée après le remplissage jusqu'au déchargement du récipient (10),
      (B) une détection d'un angle d'inclinaison (+/-w) formé entre une surface libre (N) du lait frais de qualité supérieure (P) formée vers l'espace libre (10.1) et un système de référence (BS) rapporté au récipient (10) ;
      (C) une détection d'une pression (p) dans l'espace libre (10.1) ;
      (D) une augmentation de la pression (p) en fonction de la quantité de l'angle d'inclinaison (+/-w) et proportionnellement à celle-ci par alimentation d'un fluide stérile gazeux (F) dans l'espace libre (10.1) dans des conditions stériles et
      (E) le déchargement du lait frais de qualité supérieure (P) hors du récipient (10) dans des conditions stériles.

2. Procédé de transport selon la revendication 1,

**caractérisé par** l'étape suivante :
(G) une réduction de la température du lait frais (T) dans une dernière période (Δtx) du temps d'approvisionnement (Δt) de 3,5 °C à 4 °C à 2 °C à 2,5 °C.

3. Procédé de transport selon la revendication 2,
**caractérisé en ce que**
la dernière période (Δtx) correspond à un tiers du temps d'approvisionnement (Δt).

4. Procédé de transport selon l'une des revendications 1 à 3,
**caractérisé par**

• la spécification d'une plage d'angle d'inclinaison (+/-Δw$_{max}$) formée respectivement par un angle d'inclinaison négatif maximal (-w$_{max}$) ou par un angle d'inclinaison positif maximal (+w$_{max}$) pour l'angle d'inclinaison (+/-w), et
• la spécification d'une plage de pression autorisée (Δp) entre une pression minimale (p$_{min}$) et une pression maximale (p$_{max}$) pour la pression (p) dans l'espace libre (10.1),
• dans lequel la plage de pression autorisée (Δp) est en corrélation avec la quantité de la plage d'angle d'inclinaison (+/-Δw$_{max}$).

5. Procédé de transport selon la revendication 4,
**caractérisé en ce que**
la plage de pression (Δp) mesure jusqu'à 1,4 bar de surpression.

6. Procédé de transport selon l'une des revendications 1 à 5,
**caractérisé en ce que**
la pression (p) suit l'évolution temporelle de la quantité de l'angle d'inclinaison (+/-w) détecté seulement lorsqu'une quantité consécutive de l'angle d'inclinaison (+/-w) détecté est supérieure ou égale à une quantité précédente.

7. Procédé de transport selon l'une des revendications 1 à 6,
**caractérisé en ce que**

• le système de référence (BS) est un système de référence à trois axes orthogonal (BS$_{x-y-z}$), constitué d'axes x, y et z,
• l'inclinaison de la surface libre (N) est mesurée respectivement dans un plan (E$_{x-z}$ ; E$_{y-z}$) défini par les axes x et z et par les axes y et z et
• l'angle d'inclinaison (+/-w) est déterminé à partir de ces deux valeurs de mesure orthogonales.

8. Procédé de transport selon la revendication 7,
**caractérisé en ce que**
le système de référence à trois axes orthogonal (BS$_{x-y-z}$) est formé par un premier axe principal (L$_x$) orienté dans la direction x, un deuxième axe principal (L$_y$) orienté dans la direction y et un troisième axe principal (L$_z$) orienté dans la direction z du récipient (10).

9. Procédé de transport selon la revendication 8,
**caractérisé en ce que**
soit le premier axe principal (L$_x$) ou le deuxième axe principal (L$_y$) est orienté dans une direction de déplacement (FR) du moyen de transport (TM ; TM1, TM2).

10. Procédé de transport selon l'une des revendications 1 à 9,
**caractérisé en ce que**
un dispositif de mesure de niveau de remplissage (12) destiné à détecter le niveau de remplissage du lait frais de qualité supérieure (P) dans le récipient (10) est configuré de telle façon que deux sondes de mesure (L1, L2) plongeant dans la surface libre (N) à une distance l'une de l'autre déterminent quantitativement un mouvement de débordement de la surface libre (N) à partir du degré variable de leur imprégnation.

11. Dispositif de transport pour du lait frais de qualité supérieure (P) dans des conditions de transport critiques en termes de transport et d'environnement, comportant

• un récipient (10) présentant un volume non divisé (V) de plusieurs mètres cubes pour l'approvisionnement du lait frais de qualité supérieure (P) ;

• un dispositif de remplissage et de déchargement (30*) pour le remplissage du récipient (10) avec du lait frais de qualité supérieure (P) et le déchargement de celui-ci à partir du récipient (10) ;

• un espace libre (10.1) dans le récipient (10), lequel peut être alimenté avec un fluide gazeux (F*),

• un dispositif de mesure de température (14) pour la détection d'une température du lait frais (T) dans le récipient (10),

• un dispositif de mesure du niveau de remplissage (12) avec une première sonde de mesure (L1),

• un dispositif de refroidissement (40*) maintenant constante au moins la température du lait frais (T) réduite par rapport à une température ambiante,

• un moyen de transport (TM) pour le transport du récipient (10) sous la forme d'un moyen de transport terrestre (TM1) et/ou d'un bateau (TM2),

dans lequel

• le récipient (10), configuré en association avec un dispositif de remplissage et de déchargement (30) de manière à permettre un traitement stérile complet du lait frais de qualité supérieure (P) ;

• un premier dispositif (60) doté d'au moins un premier inclinomètre (62) pour la détection d'un angle d'inclinaison (+/-w) formé entre une surface libre (N) du lait frais de qualité supérieure (P) formée vers l'espace libre (10.1) et un système de référence (BS) rapporté au récipient (10) ;

• un deuxième dispositif (16) pour la détection d'une pression (p) dans l'espace libre (10.1) ;

• un troisième dispositif (50) pour l'alimentation d'un fluide stérile gazeux (F) dans l'espace libre (10.1) dans des conditions stériles ;

• un dispositif de commande (70) capable de commander une augmentation de la pression (p) en fonction de la quantité de l'angle d'inclinaison (+/-w) et proportionnellement à celle-ci par alimentation d'un fluide stérile gazeux (F) dans l'espace libre (10.1).

**12.** Dispositif de transport selon la revendication 11,
**caractérisé en ce que**
le dispositif de commande (70) présente une mémoire (72), dans laquelle

• est enregistrée une plage d'angle d'inclinaison (+/-$\Delta w_{max}$) entre un angle d'inclinaison négatif maximal (-$w_{max}$) et un angle d'inclinaison positif maximal (+$w_{max}$) pour l'angle d'inclinaison (+/-w),

• est enregistrée une plage de pression autorisée ($\Delta p$) entre une pression minimale ($p_{min}$) et une pression maximale ($p_{max}$) pour la pression (p),

• dans lequel la plage de pression autorisée ($\Delta p$) est en corrélation avec la quantité de la plage d'angle d'inclinaison (+/-$\Delta w_{max}$).

**13.** Dispositif de transport selon la revendication 11 ou 12,
**caractérisé en ce que**

• il est prévu deux inclinomètres (62, 64) dans le système de référence (BS), lequel consiste en un système de référence à trois axes orthogonal ($BS_{x-y-z}$) constitué d'axes x, y et z,

• le premier inclinomètre (62) mesure l'inclinaison de la surface libre (N) dans un premier plan ($E_{x-z}$) défini par les axes x et z et

• un deuxième inclinomètre (64) mesure l'inclinaison de la surface libre (N) dans un deuxième plan ($E_{y-z}$) défini par les axes y et z et

• le dispositif de commande (70) détermine l'angle d'inclinaison (+/-w) à partir des deux valeurs de mesure orthogonales du premier et du deuxième inclinomètre (62, 64).

**14.** Dispositif de transport selon la revendication 13,
**caractérisé en ce que**
le système de référence à trois axes orthogonal ($BS_{x-y-z}$) est formé par un premier axe principal ($L_x$) orienté dans la direction x, un deuxième axe principal ($L_y$) orienté dans la direction y et un troisième axe principal ($L_z$) orienté dans la direction z du récipient (10).

**15.** Dispositif de transport selon la revendication 14,
**caractérisé en ce que**
soit le premier axe principal ($L_x$) ou le deuxième axe principal ($L_y$) est orienté dans une direction de déplacement (FR) du moyen de transport (TM ; TM1, TM2).

**16.** Dispositif de transport selon l'une des revendications 13 à 15,
**caractérisé en ce que**
le récipient (10) est formé de façon allongée dans la direction x et disposé de manière à s'étendre dans cette direction.

**17.** Dispositif selon l'une des revendications 11 à 16,
**caractérisé en ce que**
le volume (V) du récipient (10) est supérieur ou égal à 20 m$^3$ (V $\geq$ 20 m$^3$).

**18.** Dispositif de transport selon l'une des revendications 11 à 17,
**caractérisé en ce que**
le dispositif de mesure de niveau de remplissage (12) présente une deuxième sonde de mesure (L2), dans lequel les première et deuxième sondes de mesure (L1, L2) sont disposées à une distance l'une de l'autre et s'engagent dans la surface libre (N) du lait frais de qualité supérieure (P) par le biais de l'espace libre (10.1).

**19.** Dispositif de transport selon l'une des revendications 11 à 18,
**caractérisé en ce que**
il est prévu un réservoir tampon (52) doté d'un volume tampon adapté à la taille de l'espace libre (10.1), lequel est optionnellement relié à l'espace libre (10.1) et dans lequel est stocké le fluide stérile gazeux (F) à une surpression de 4 bar.

**20.** Système (100) comprenant un dispositif de transport (1) selon l'une des revendications 11 à 19,
**caractérisé en ce que**

• le système (100) présente une plateforme de remplissage et de déchargement (200),
• la plateforme de remplissage et de déchargement (200) comporte les dispositifs fonctionnels (210, 230, 240, 250) suivants :

• un quatrième dispositif (210) pour la mise à disposition de produits de nettoyage (RM),
• des conduites de remplissage et de déchargement (230),
• un cinquième dispositif (240) pour la mise à disposition de liquide de refroidissement (K) et
• un sixième dispositif (250) pour la mise à disposition de fluide stérile gazeux (F),

et **en ce qu'**une interface d'accouplement (S) permet de relier

• le quatrième dispositif (210) à des raccords de produits de nettoyage (a, b, c),
• les conduites de remplissage et de déchargement (230) au dispositif de remplissage et de déchargement (30),
• le cinquième dispositif (240) au dispositif de refroidissement (40) et
• le sixième dispositif (250) au troisième dispositif (50).

**Fig. 1**

EP 4 021 169 B1

## Fig. 2a

**Fig. 2**

**Fig. 3a**

**Fig. 3**

Fig. 4

EP 4 021 169 B1

12; L1    14; T    16; p    F; 50    N    12; L2    10.1

s1

**Figur 5a**

10    BS    z    y    x    RA    Lx    P

**Figur 5**

**Figur 5b**

10.1    N    z    x    RA    +w

BS    10

**Figur 5d**    s2

10.1    N    z    RA    x

**Figur 5c**    10    -w

10.1    N    z    BS    Lx    +w

RA    x

**Figur 5e**    10    x

ΔA

s1    A1    A1

s2

**Figur 5g**    **Figur 5f**

P

| A | P | 10 |

| B | +/-w; L1; L2 | 60; 12 |

| C | p | 16 |

| D | p = f(/w/) | 50 |

Δt

t

| E | P | 10 |

P

**Fig. 6**

P

| A | P | 10 |

| B | +/-w; L1; L2 | 60; 12 |

| C | p | 16 |

| D | p = f(/w/) | 50 |

| B | +/-w; L1; L2 | 60; 12 |

Δtx

| C | p | 16 |   | G | T | 40 |

| D | p = f(/w/) | 50 |

| E | P | 10 |   **Fig. 6a**

P

**Fig. 7**

**Figur 9**

p = f(t)

p [bar]

$p_{max}$

$\Delta p$

$p_b = p_{min}$

|w| [Grad]

t1 t2 t3 t4 t5 t6 t7 t8 t9

**Figur 8**

T [°C]

T = f(t)

|w| = f(t)

$|+/-w_{max}|$

$|+/-\Delta w_{max}|$

|w| [Grad]

$\Delta t$ $\Delta tx$

t1 t2 t3 t4 t5 t6 t7 t8 t9

**IN DER BESCHREIBUNG AUFGEFÜHRTE DOKUMENTE**

**In der Beschreibung aufgeführte Patentdokumente**

- WO 2014040700 A1
- US 20120276262 A1

- WO 9923016 A1